# EUROPEAN PATENT APPLICATION

(11) **EP 0 628 823 A1**
(43) Date of publication of application: **14.12.1994**
(21) Application number: 94900290.1
(22) Date of filing: 19.11.1993
(51) Int. Cl.: G01N 35/02, G01N 35/04

(54) **MULTI-CHANNEL AUTOMATIC IMMUNOASSAY SYSTEM**

(30) Priority: 20.11.1992 JP 311884/92
(71) Applicant: DAINABOT CO., LTD., Minato-ku, Tokyo 105 (JP); PRECISION SYSTEM SCIENCE CO., LTD., Inagi-shi, Tokyo 206 (JP); ABBOTT LABORATORIES, Abbott Park, Illinois 60064-3500 (US)
(72) Inventor: TAJIMA, Hideji, Precision System Science Co., Ltd., Tokyo 206 (JP); NAGAOKA, Nobuo, Precision System Science Co., Ltd., Tokyo 206 (JP); KANAZAWA, Kenichi, Dainabot Co., Ltd., Matsudo-shi, Chiba-ken 271 (JP); KUBO, Yoshinobu, Dainabot Co., Ltd., Matsudo-shi, Chiba-ken 271 (JP)
(74) Representative: VOSSIUS & PARTNER
(86) International application number: JP9301701
(87) International publication number: WO9412885

(57) **Abstract**

A dispensation module adapted to supply in order reaction trays each of which has a plurality of wells, and dispense a specimen to the reaction trays on the basis of set specimen information, a sample processing module adapted to dispense, on the basis of the set specimen information, a reaction reagent, which corresponds to a measurement item for a specimen, in the corresponding well, and transfer the specimen while retaining the same at a constant temperature, and a detecting module adapted to dispense a reaction measuring reagent in each well in the reaction trays on the basis of the set specimen information, and having a means for measuring the luminescent intensity are provided in an adjacently lines state. A walking beam mechanism, which is adapted to transfer reaction trays slidingly and intermittently, is employed for the transferring of the reaction trays in the sample processing module and detecting module. During the dispensation of reagent by the sample processing module, reagent dispensation nozzles are moved in the direction perpendicular to the reaction tray transfer direction and the dispensation is carried out within the stopping time of the intermittent sliding transfer of the reaction trays and at regular time intervals with respect to each well placed in a position of a set order, in a reaction tray. The measurement with the detecting module is conducted at regular time intervals correspondingly to each well placed in a position of the set order. The specimens dispensed in the wells in the reaction trays are subjected to operations from the dispensation of a reagent to the measurement of luminescent intensity under the same conditions at the same time intervals, so that all the specimens processed in large quantities can be measured accurately.

## Description

### Technical Field

The present invention relates to a system for measuring a very small amount of component in a specimen, which utilizes an immunoreaction and permits random access to plural samples or specimens to automatically carry out measurements of predetermined plural examination items, and more particularly to the system, wherein a walking-beam mechanism is selected as means for transferring reaction trays and an incubation is effected out during the transfer of the reaction trays.

### Background Art

It has been developed various measuring systems for effecting a measurement of a very small amount of component in a specimen such as blood, urine or the like body fluid, for example serum. Particularly, in biochemical analyzers, there are many systems having so-called "random access function", namely reaction vessels, each accommodating the specimen, are transferred into an incubator to permit an addition of a predetermined reagent(s) at predetermined time and additional charging of the specimen.

However, such random access type measuring systems for the biochemical analysis are designed to handle reactions which are finished within a short period of time, for instance, in fifteen minutes. Therefore, these systems cannot be used in immunoassays requiring a relatively long time, say sixty minutes involved for incubation prior to a detection of immunoreaction product. Therefore, almost all immunoassay systems use a stationary incubator. Namely, a specimen and and reagent(s) for immunoreaction are dispensed into a large number of reaction vessels (about 300 vessels) in the form of cell or test tube arranged in their stand which is transferred to the stationary incubator and put on a stationary rack therein to keep the same for the period of time required for the incubation.

Then, the stand is transferred to a processing position for B/F separation and a distribution of another reagent, returned to the incubator, and finally, taken out from the incubator to measure an absorbance, radio activity, intensity of luminescence or oxygen activity depending on a selected assay marker. According to this type immunoassay system, number of testings is limited to the number of reaction vessels to be used, and once the test on a specific examination item has started, next assay on another examination item cannot be effected, until the end of the former assay. Therefore, an automated immunoassay system having a random access function has been strongly demanded, in lieu of such a batch processing system.

For solving such a problem, a random access type immunoassay apparatus has been proposed in Japanese Patent Hei 3-51762 (A) which corresponds to USP 5,178,834 and EP-A-0 409 606. The apparatus comprises an endless specimen vessel transfer conveyor having large number of portions, each of which carries a specimen vessel, along its transferring direction, said specimen vessel transfer conveyor passes from a first stage as an operation point for setting the specimen vessel to its carrying portion to return to the first stage through a stage for suctioning the specimen from each of the specimen vessels by a dispensing means; a first conveyor driving means for sequentially transferring and stopping said specimen vessels to and at said suctioning stage corresponding to a respective carrying portion zone determined sequentially by zoning said carrying portions of said specimen vessel transfer conveyor by a number corresponding to a number of examination items on each of said specimens carried; a reaction vessel transfer conveyor having large number of portions, each of which carries a reaction vessel, along its transferring direction, said reaction vessel transfer conveyor passes from a second stage as an operation point for setting the reaction vessel to its support portion to return to the second stage through a stage for dispensing the specimen sucked by said dispensing means and a reaction-measurement stage where a immunoreaction is performed in the reaction vessel and measurement of reaction result is performed; a second conveyor driving means for sequentially transferring, stopping and feeding out said reaction vessels to, at and from said dispensing stage, in a state that said reaction vessels corresponding to said examination item of each of said specimen are sequentially carried by said carrying portions of said reaction vessel transfer conveyor; means for synchronously and simultaneously actuating said first and second conveyor driving means; and means for stopping and holding one of said specimen vessels transferred into said suction stage for a predetermined time period of that said reaction vessels, number of which corresponds to number of said specimens, is transferred and stopped sequentially into and at said division-pouring stage. In the patent literature, it has been stated that this apparatus has such advantages that a random access is possible, structure is simple, and a relatively small number of specimens or a large number of specimens can be handled by changing the length of the conveyor for specimens, while keeping in common the fundamental structure thereof.

The apparatus has, however, disadvantages of that snake chain-type conveyers are selected, a difficulty in mechanism will occur, in actual, for intermittently move a long snake chain-type conveyers, and since the immunoassay requires a relatively long time period incubation of about 60 minutes or more and heating for the incuvation causes a gradual elongation of the conveyor, even in slight extent, which makes difficult a precise positioning of the reaction vessels in synchronous with that of the vessels for the specimen and reagents which are not heated or warmed, to stop the specimen vessels at a precise position in the dispensing stage for the specimen, dispensing stage for each of the reagents, B/F separation stage and the like. Namely, preprogrammed operation procedures to be quickly effected are impossible, if the precise positioning cannot be attained. The patent literature refers to a 1-step and 2-steps sandwiched methods which requires a B/F separation, but no explanation is given as to manner for carrying out the separation, in connection with the transfer of reaction vessels. Japanese Patent Hei 3-160981(A) corresponding to EP-A-0 424 633 discloses a reaction tray suitable for immunoassays and more particularly, automated solid-phase diagnostic assays. The reaction tray comprises a pair of plural wells, each well having a first cavity (called as "sample well") of sloping down configuration, a second cavity (called as "read well) neighboring to the first cavity and having a conical configuration with an aperture at bottom thereof and a small hole to bent the air; a fibrous pad fitted in the aperture; and an absorbent matrix. In case of using this reaction tray, a sample of specimen such as serum is distributed into the first cavity, and then wet microparticles for a solid-phase and an assay reagent are distributed to the first cavity for pre-incubation. In next, a transfer buffer is jetting injected into the first cavity to transfer the materials therein to the second cavity. In this case case, solution components are absorbed by the absorbent matrix through the fibrous pad fitted in the bottom aperture of the second cavity to perform B/F separation. In case of 2-step sandwiched assay method, then, a conjugate is distributed into the second cavity for incubating the same for immunoreaction, washing marked and fixed antibody-antigen, and finally detecting the marker to quantitatively measure the antigen or antibody in the specimen.

The tray is transferred by a timing belt with a log abutting to push the tray, said timing belt being driven under control of a stepping motor through a gear reduction system. It has been disclosed that the trays are set between the logs in a manner transversing the timing belt and transferred by the belt in its running direction.

Therefore, each first cavity of the reaction trays is serially positioned in transferring direction and the timing belt must be driven with a very short-stroke movement for effecting each divisional distribution of specimen and reagent(s). As a result, the very short-stroke movement of the timing belt should always be watched to avoid a possible displacement of the tray from predetermined precise position.

While, in Japanese Patent Hei 3-154853(A) corresponding to USP 5,089,424 and EP-A-0 424 634, there is disclosed an apparatus for and method of measuring a chemiluminescence, which comprises a detector having a frame, detector heads each consisting of a shroud and a port for a fluid line of a trigger reagent, a flexible diaphragm, and a mechanism for vertically moving the shroud. According to this apparatus, down movement of the shroud by the lifter mechanism effects a light seal of a reaction tray as disclosed in said Japanese Patent Hei 3-160981(A) corresponding to EP-A-0 424 633 and the trigger reagent is distributed in a cavity of the reaction tray, namely in the second cavity accommodating fixed antibody-antigen marked with a chemiluminescent moiety which reacts with the trigger reagent to generate the chemiluminescence, to detect intensity of the chemiluminescence by the detector.

In this case, the shroud downs to abut to upper surface of the reaction tray for sealing from the light for each cavity, but a slight displacement makes impossible complete light seal to cause a mistake in the measurement. Assume that a single tray has eight compartments arranged parallel in two lines, and then the up-and-down movements of the shroud and detector head must be repeated eight times, accordingly working efficiency for the measurement becomes low. Further, exact measurement is impossible, since plural detection heads are employed and difference in performance of the detection heads forms an error in measurement.

As described above, the conventional immunoassay systems use the snake-chain type conveyers or timing belts as transferring means for carrying the reaction trays and as a result, even if the random access is permitted but disadvantageously, the positioning of trays for effecting required divisional distribution of specimen and reagent(s) into such trays are difficult, and also disadvantageously the trays must be intermittently moved at a very short stroke corresponding to the size of the cavity in the tray to decrease working efficiency, so that the handling of specimens in a large number remains unsolved.

Especially, the long time incubation causes the thermal expansion or elongation of the conveyer means, so that the positions for division distributing the specimen and reagent(s) gradually change to cause a problem of misalignment with the reaction trays.

Therefore, main object of the invention is to provide an automated multi-item immunoassay system permitting the random access processing and allowing measurements and examinations with an increased efficiency, as to a lot of specimens, and with accuracy.

Another object of the invention is to provide an automated multi-item immunoassay system which is capable of divisional distribution of a selected specimen and a selected reagent(s) exactly and quickly at each predetermined position according to given informations for measurement or examination items on the selected specimen.

Still other object of the invention is to provide an automated multi-item immunoassay system which is capable of timely controlling the intermittent movement of reaction tray conveyer and the dispensing means for the specimen and reagent(s), so that specimens in large number can be handled with very high efficiency.

### Disclosure of Invention

An automated multi-item immunoassay system according to the invention comprises a dispensing module which subsequently supply reaction trays with a plurality of wells and has a specimen dispensing unit for dispensing the specimen in each well of the reaction tray, in accordance with predetermined informations on the specimen; a specimen processing module which dispenses a reagent(s) depending upon an examination item on each specimen into the well to cause a reaction with a substance to be detected; and a detection module which dispenses a measuring reagent (trigger reagent) into each well in accordance with the predetermined informations on the specimen to measure an intensity of luminescence; said modules being arranged side-by-side in series to permit intermittent and sliding transfer of said reaction trays and dispensing of the specimen and reagents with a predetermined time interval at stopping period of time, during the intermittent movement of the reaction trays.

A plurality of series of reaction trays are arranged in parallel, and are transferred intermittently. There are a corresponding plurality of specimen dispensing modules, each comprising lift means for vertically supplying reaction trays, and transfer means for transporting reaction trays thus sequentially raised and arranged in parallel to a specimen dispensing stage, where injection nozzle units suck a selected specimen to dispense the specimen into selected wells of a selected reaction tray, but finally, leaving no empty well in every reaction tray. Thus, a lot of reaction trays are continuously transported and injected with each of selected specimens, with an increased efficiency.

The reaction tray conveyer means includes, in the direction in which reaction trays are transported, a first detection means on the front or upstream side of the dispensing position and a second detection means on the rear or downstream side of the dispensing position of the specimen, whereby reaction trays are allowed one after another to the dispensing position when the first detection means detects a leading reaction tray and when no reaction tray remains in the dispensing position, and the reaction tray is allowed to leave the dispensing position when the second detection means detects no reaction tray ahead. The specimen injection nozzle unit is of duplex nozzle type, comprising two sub-nozzle units capable of functioning independently, but one of said two sub-nozzle units when shifted a distance corresponding to a selected number of wells to reach a selected well according to given informations of immunoassay or examination items on a selected specimen, accompanying the other sub-nozzle unit, thus permitting these two sub-nozzle units to simultaneously start required dispensing of the specimen into the selected well. The specimen injection nozzle unit has a disposable injection tip to be attached to its injection nozzle end. Each injection tip has a tapering configuration, rear end of which is larger in diameter than that of the nozzle for the specimen injection nozzle unit, so that the injection tip can be attached to the associated nozzle end when the nozzle descends down, and removed from the associated nozzle by being caught by the rear end when the nozzle rises up subsequent to the dispensing of specimen. The dispensing module includes dilution means, which is adapted to inject a dilution liquid into each of selected wells of each of selected reaction trays before and after dispensing of the specimen into the well, thus permitting the agitation of diluted specimen to homogenize the same.

The reaction tray transfer means in the specimen processing module has a walking beam mechanism in which parallel transfer beams are adapted to rise, move forward, descend and move backward, thereby causing intermittent sliding movement of the reaction trays. Each transfer beam is designed to rise and descend by rotating an associated eccentric axle, which is operatively connected to the transfer beam. Alternatively each transfer beam is designed to move forward and backward with the aid of associated cams. Extension of such reaction tray transfer means to the detection module permits reaction trays to move from the dispensing module to the detection module via the specimen processing module at a prescribed step rate or stroke, thereby allowing all measurements and examinations to be made on different immunoassays in same conditions.

The specimen processing module effects the dispensing of reagent into the reaction trays and washing of immunoreaction product therein at the time of pause of the step-by-step transfer of the reaction trays. A plurality of dispensing positions are spaced along the elongated path on which parallel-arranged reaction trays travel, and each dispensing position has a plurality of reagent injection nozzles arranged perpendicular to the reaction tray travelling path, and the reagent injection nozzles are movable across the reaction tray travelling path to permit the dispensing of reagent into reaction trays in each line at regular time intervals, thereby controlling incubation period to allow every dispensed specimen to react with reagent under one and same condition thus to assure precise measurements.

The measurement in the detection module is made at the same time intervals as that for the dispensing of reagent in the specimen processing module. A device for measuring the intensity of luminescence in the detection module includes an integration of a shutter plate and a measuring reagent (trigger reagent) injection nozzle. The shutter plate is designed to close the bottom opening of a casing to provide dark room while supporting reaction trays thereon, completely blocking the light into the dark room to improve the exactness with which required optical measurements are made.

### Brief Description of Drawings

Fig. 1 is a front view showing schematically the whole arrangement of an automated multi-item immunoassay system according to the invention;
Fig. 2 is a plan view of a reaction tray to be used for the immunoassay system according to the invention;
Fig. 3 is a section taken along the line A-A in Fig. 2;
Fig. 4 is an enlarged section taken along the line B-B in Fig. 2, showing how a dispensing of a transfer buffer is effected into the reaction tray;
Fig. 5 is an illustration showing how reaction trays are transported through a dispensing module;
Fig. 6 is a perspective view of an injection nozzle unit in the dispensing module, showing how disposable injection tips are attached to nozzle ends;
Fig. 7 is a perspective view of the injection nozzle unit in the dispensing module, showing how specimens are injected into wells of the reaction tray;
Fig. 8 is a perspective view, showing how the disposable injection tips are removed from the nozzles in the injection nozzle unit of dispensing module;
Fig. 9 is a plan view of a specimen dilution mechanism in the dispensing module;
Fig. 10 is a flow chart showing proceedings from dilution of a specimen to dispensing of the diluted specimen into wells;
Fig. 11 is an illustration showing how direct dispensing of a specimen into wells, dilution of the specimen and distribution of the diluted specimen into wells are effected according to given informations of examination item on the selected specimen;
Fig. 12 is illustrations showing one of manners for diluting the specimen;
Fig. 13 is a longitudinal vertical view of a walking beam mechanism to be used in the immunoassay system according to the invention;
Fig. 14 is an exploded perspective view of the walking beam mechanism shown in Fig. 13;
Fig. 15 is a perspective view of another walking beam mechanism, a part thereof being cut-off to show essential parts of the mechanism;
Fig. 16 is a schematic illustration showing the whole arrangement of assay line in the immunoassay system according to the present invention;
Fig. 17 is a plan view of the arrangement of assay line;
Fig. 18 is an illustration showing how a reagent is dispensed into a well of the reaction tray in the assay line;
Fig. 19 is an illustration showing how a transfer buffer and wash buffer are distributed into wells of the reaction trays in the assay line;
Fig. 20 is illustrations showing how the wash buffer or conjugate (or probe reagent) is distributed into the wells of reaction trays;
Fig. 21 is vertical front view showing major parts of the detection module of the immunoassay system according to the invention;
Fig. 22 is a vertical front view of a reaction tray transfer means in the detection module;
Fig. 23 is a front view of the detection module, showing how reaction trays are allowed to enter and leave from a dark room;
Fig. 24 is a sectional view of a shutter mechanism of the detection module prior to complete closing;
Fig. 25 is a plan view of the shutter mechanism of the detection module prior to complete closing;
Fig. 26 is a sectional view of the shutter mechanism of the detection module in complete closing position;
Fig. 27 is a plan view of the shutter mechanism of the detection module in complete closing position; and
Fig. 28 is a block diagram showing a controlling system associated with the immunoassay system according to the invention.

### Best Mode for Carrying Out the Invention

An automated multi-item immunoassay system according to the present invention shall be explained in more detail with reference to embodiments shown in the drawings. The explanation shall be given in following Chapter order:
[1] Whole Arrangement of Immunoassay System
   (1) Dispensing module,
   (2) Specimen processing module, and
   (3) Detection module.
[2] Structure of Reaction Trays Used in Immunoassay System
[3] Supplying of Reaction Trays in Immunoassay System
[4] Dispensing of Specimen into Wells of Reaction Tray
[5] Dilution of Specimen
[6] Walking Beam Mechanism
   (1) Belt-type walking beam mechanism, and
   (2) Cam-type walking beam mechanism.
[7] Dispensing of Reagent(s) and Incubation
[8] Assay Lines
   (1) Two-step type assay line, and
   (2) Three-step type assay line.
[9] Measurement in Terms of Luminescence
   (1) Detection module equipped with extra transfer means, and
   (2) Detection module having extended walking beam mechanism,
   and
   [10] Data Processing Module

### [1] Whole Arrangement of Immunoassay System

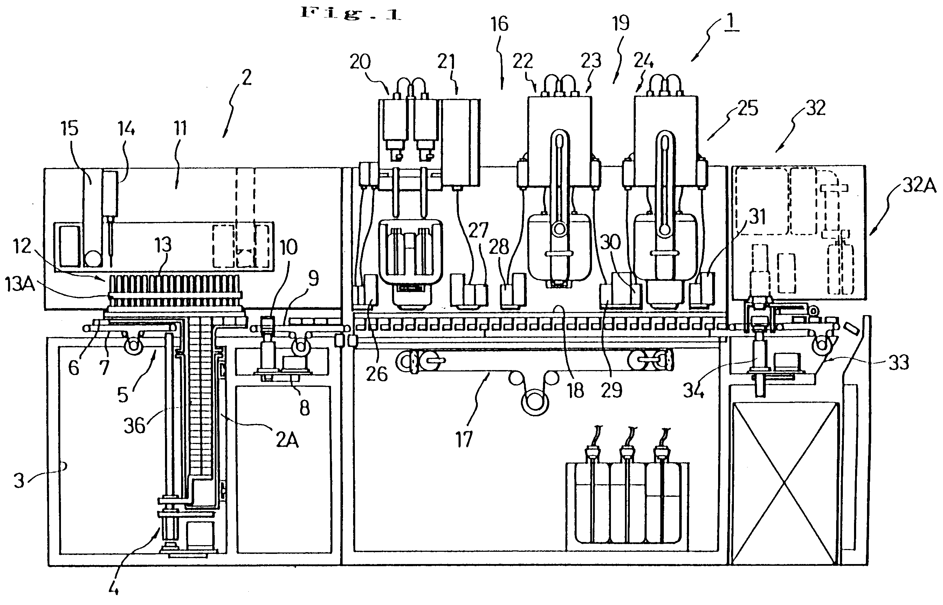

Referring to Fig. 1, an automated multi-item immunoassay system 1 according to the invention comprises a dispensing module 2, a specimen processing module 16 and a detection module 32 arranged side by side in series, thereby making required measurements on a very small amount of component in a specimen in terms of intensity of luminescence according to the chemiluminescence immunoassay (abbreviated as "CLIA"). All modules are systematically controlled by a data processing unit of a computer system.

### (1) Dispensing module

The dispensing module 2 comprises a tray supply section 2A, a first tray transfer section 5, a second tray transfer section 8, and a specimen dispensing section 11, so that the module transfers reaction trays one by one to an appropriate position to dispense a specimen such as serum of a patient into a first cavity of each well of the selected reaction tray. The tray supply section 2A is designed to lift the reaction trays 36 like an elevator by a driving source 4, which is placed at the lower portion of the tray supply section 2A, the reaction trays being stacked in pairs to be lifted and supplied sequentially to the first tray transfer section 5. A lot of reaction trays 36 are stored in a storage 3.

According to the embodiment, the tray supply section 2A can accommodate the reaction trays of 25 in vertical x 2 in lateral row x 2 in longitudinal row and thus 100 reaction trays in total. A quantity of reaction trays 36 remaining in the tray supply section can be confirmed by checking an associated counter. Photo detectors are provided at the top of the tray supply section 2A to detect rising reaction trays. The storage 3 can accommodates the reaction trays of 25 in vertical x 40 in row and thus 1000 reaction trays in total, which shall be set into a group of 4 reaction trays 36 in horizontal x 25 in vertical to supply the same to the tray supply section 2A, in sequential manner.

The first tray transfer section 5 comprises a push arm 6 and an endless conveyer 7, so that each of the reaction trays 36 can be fed to the second tray transfer section 8 with minimum vertical movement and mechanical impact.

The second tray transfer section 8 receives the reaction trays 36 from the first tray transfer section 5 to transfer them forward horizontally, and raise them up to a predetermined level at the specimen dispensing stage 10. When completing the dispensing, the reaction trays 36 each accommodating the specimen injected into its wells are ready to be transferred to the following module. The feeding of these reaction trays shall be explained in detail in Chapter [3].

The specimen dispensing section 11 comprises a specimen rack 12, a dual type specimen injection nozzle unit 14, a nozzle drive 15 for driving the specimen injection nozzle unit 14 in the X-, Y- and Z-axis directions. a dispensing tip container 57 for accommodating disposable injection tips 56 to be attached to the specimen injection nozzles, and a used tip container 57A for collecting used tips.

A plurality of specimen containers 13 each accommodating a selected specimen such as serum are arranged in the predetermined order in the specimen rack section 12. Specifically, a plurality of batches each made up by two hundred specimen containers 13 are accommodated in a specimen rack 13A. A plurality of such specimen racks 13A are stored in an appropriate place, and are identified in terms of bar-codes, which can be read by a bar-code reader.

The specimen dispensing nozzle unit 14 is composed of two sub-nozzle units 14A and 14B movable independently in X-, Y- and Z-axis directions and capable of sucking a predetermined quantity of specimen from selected specimen containers 13 in the specimen rack section 12 to inject the same into selected reaction trays 36 at predetermined dispensing position 10. Also, the sub-nozzle units 14A and 14B are capable of diluting the specimen prior to the dispensing of specimen into the reaction trays. The dispensing and dilution of the specimen shall be explained in detail in Chapters [4] and [5], respectively.

### (2) Specimen processing module:

The specimen processing module 16 comprises a walking beam mechanism 17, a heat panel mechanism 18 and a reagent dispensing mechanism 19.

The walking beam mechanism 17 is designed to trace a letter "D" for intermittently and slidingly transferring the reaction trays, thereby permitting the dispensing of a reagent(s) into the reaction trays at predetermined positions and incubation at a predetermined temperature. The walking beam mechanism 17 can put reaction trays exactly in position to permit the dispensing of reagent to wells, each accommodating the specimen, in the predetermined order within a predetermined period of time, in the course of transportation of the reaction trays. The walking beam mechanism 17 shall be explained in detail in Chapter [6].

The heat panel mechanism 18 has a plurality of heat panels arranged at regular intervals above the walking beam mechanism 17. Each of the heating panels has a length and width to maintain temperature of reactants in wells of the reaction trays which are transferred by the walking beam mechanism 17 with a predetermined velocity over a predetermined distance. Above the heat panel mechanism 18, a reagent dispensing mechanism 19 is arranged, assay portions thereof 26, 27, 28, 29, 30 and 31 being also arranged between each of neighboring heat panels.

The reagent dispensing mechanisms 19 comprises a series of reagent dispensing sections 20, 21, 22, 23, 24 and 25 as well as the associated assay portions 26, 27, 28, 29, 30 and 31. Each of these assay portions 26, 27, 28, 29, 30 and 31 can perform a random-access dispensing to permit, in maximum, ten immunoassay or examination items on a selected specimen. A nozzle unit constituting each of the assay units 26, 27, 28, 29, 30 and 31 is designed to move forward and backward while the reaction trays 36 on the walking beam mechanism 17 stop in the pause of the step-by-step transfer of the reaction trays, thus effecting the required dispensing of reagent(s) into the specimen accommodating reaction trays in the prescribed order according to given informations of immunoassay or examination item on a selected specimen.

Each nozzle has a sensor attached to its tip end for detecting the ejecting of reagent, and hence the dispensing of reagent into reaction trays can be checked. The structure of specimen processing module shall be explained in detail in Chapter [7].

### (3) Detection Module:

The detection module 32 comprises a vertical drive section 33 and a specimen measurement section 32A, which is designed to determine the intensity of luminescence generated by a trigger reagent injected into the second cavity of each well of the reaction tray 36, in which second cavity the specimen is immunoreacted with the reagent added in the specimen processing module 16. The data of luminescent intensity thus determined are processed by a data processing module (not shown).

The vertical drive section 33 raises the reaction trays 36 to put in a dark room in the specimen measurement section 32A. The vertical drive section 33 is composed of a vertical guide-drive mechanism 34 and a shutter mechanism 35.

The vertical guide-drive mechanism 34 is designed to lift reaction tray(s) 36, whereas the shutter mechanism 35 is designed to bear the reaction trays 36 and close the bottom opening of a casing to provide the dark room when the reaction trays are in the casing.

The specimen measurement section 32A is designed to determine the intensity of luminescence to be generated by the reacting specimen when a triggering reagent is added in the dark room. The detection module and data processing module shall be explained in detail in Chapters [9] and [10], respectively.

### [2] Structure of Reaction Trays Used in Immunoassay System:

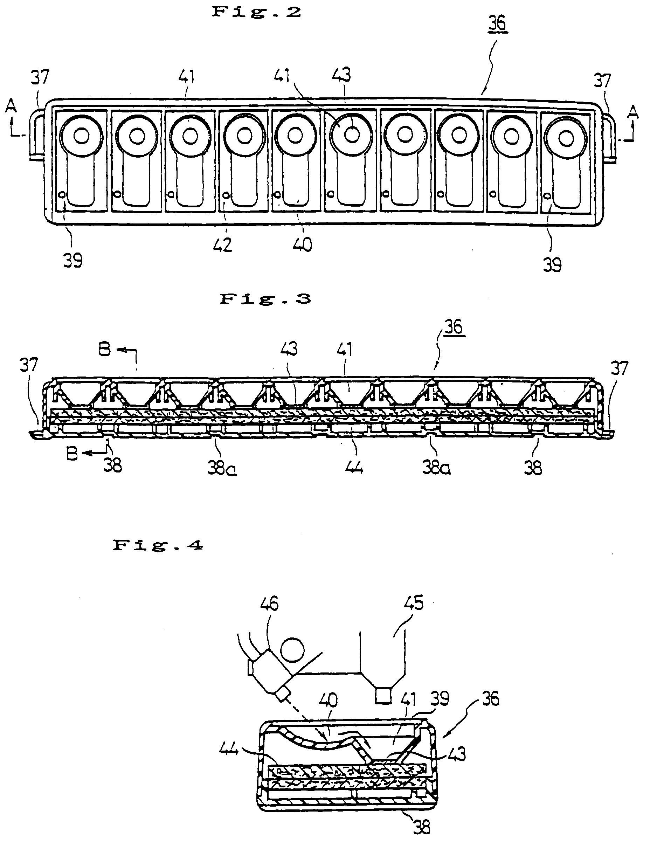

Referring to Figs. 2 and 3, a reaction tray 36 is a rectangular, box-like one having positioning pieces 37, 37 integrally connected to the longitudinally opposite lower edges and ten wells 39 in the form of compartments.

The reaction tray has four transversal guide slots 38, 38, 38a and 38a in the bottom thereof.

Each well 39 has a dish-like first cavity 40 for preincubation purpose and a cone-shaped second cavity 41 for post-incubation and measurement purposes. A vent hole 42 is made in the vicinity of each well 39, and a fibrous matrix 43 is laid in the bottom opening of the second cavity 41, and an absorbent 44 is laid on the bottom of the reaction tray 36. A number of wells 39 in each reaction tray is optionally selected.

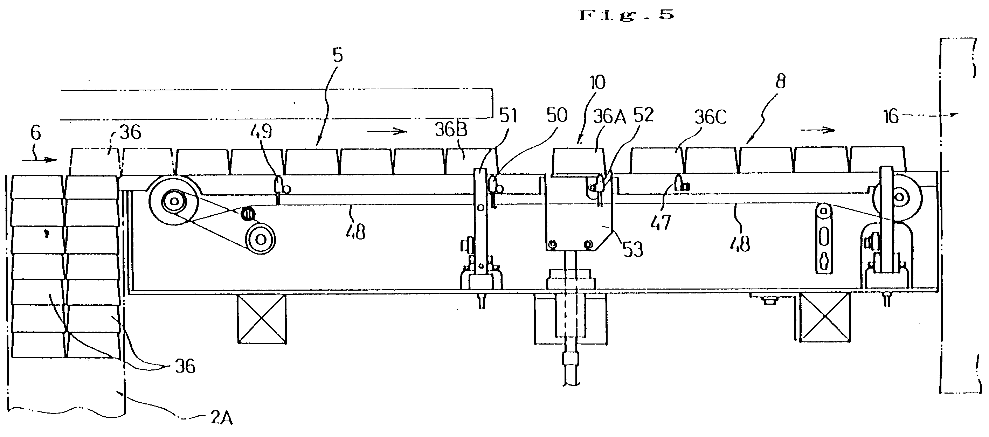

As shown in Fig. 4, a selected specimen is injected into the first cavity 40 of each well 39 in the reaction tray 36, and then a reagent is injected into the first cavity 40, allowing pre-incubation of the mixture. After the pre-incubation, an inclined wash nozzle 46 positioned adjacent to a reagent injection nozzle 45 ejects a wash or transfer buffer to transfer the specimen reacted with the reagent to the second cavity 41, while washing the reaction mixture. Thus, the reacted component remains in the second cavity 41 and the remaining components passes through the fibrous matrix 43 to be absorbed in the absorbent 44.

Thanks to the transferring of the reacted component in specimen to the second cavity 41 of the well, a sucking and injecting operations of the reaction mixture are not required for the reagent injection nozzle unit 45, thereby the unit can be operated exclusively to a continuous dispensing of the reagent. In the embodiment, an amount for dispensing of the specimen and others to the first cavity 40 of the reaction tray 36 is set in a range of 20 to 200µl.

### [3] Supply of Reaction Trays to the Immunoassay System:

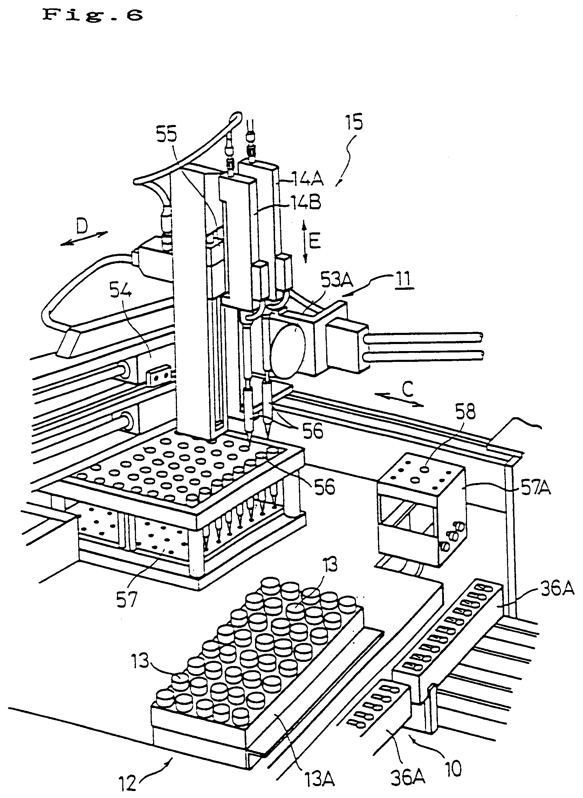

Referring to Fig. 5, a plurality of reaction trays 36 are lifted by the reaction tray supplying means 2A, and then reaction trays 36 are transported to the specimen dispensing stage 10 by the belt conveyer 48. Thus, empty reaction trays 36B and specimen-injected reaction trays 36c are separated by the specimen dispensing stage 10.

Specifically, the push arm 6 pushes empty reaction trays 36 appearing at the top of the reaction tray supplying means 2A until these reaction trays 36 are put on the belt conveyer 48, and then they are moved forward in the X-axis direction as indicated by an arrow. A first photo-sensor 49 detects reaction trays 36 on the upstream side, and a second photo-sensor 50 detects reaction trays 36 on the downstream side.

When presence of reaction trays 36 is detected by these photo-sensors 49 and 50, empty reaction trays are ready to be supplied to the specimen dispensing stage 10. When the upstream photo-sensor 49 detects no reaction trays 36, there are no reaction trays 36 in the reaction tray supplying means 2A, and then, warning means such as a buzzer informs persons of the lack of reaction trays in the reaction tray supplying means 2A. The reaction tray supplying means 2A is loaded with a predetermined number of reaction trays (100 = 25 x 2 x 2), and then it resumes and continues the lifting operation until the photo-sensor 49 detects the presence of the leading ones of parallel series of reaction trays 36, which are pushed by the push arm 6 and transferred by the belt conveyer 48.

In this connection, it is necessary that between the upstream and downstream photo-sensors 49 and 50, there are reaction trays 36 of the number large enough to permit the reloading of reaction trays in the reaction tray supplying means 2A, after being informed of the lack of reaction trays 36 therein. In this particular embodiment, there are four reaction trays 36 between the upstream and downstream photo-sensors 49 and 50. So long as reaction trays 36A remain at the specimen dispensing stage 10, the feeding of subsequent reaction trays 36B is prevented by a provisional stopper 51, thereby putting subsequent reaction trays 36B in the stand-by position.

After dispensing of a selected specimen, the specimen accommodating reaction trays 36A descend as the dispensing stage 10 descends, so that the specimen accommodating reaction trays are put on the belt conveyer 48 to leave the stage 10, and then the provisional stopper 51 is released for allowing the belt conveyer 48 to carry subsequent empty reaction trays until a photo-sensor 52 detects the leading empty reaction trays 36. Then, the provisional stopper 51 rises to stop further advance of subsequent reaction trays 36B, and a tray stopper 53 rises to stop the reaction trays 36A at appropriate position in the dispensing stage 10. Then, the reaction trays 36A are raised for dispensing of a specimen.

After leaving the dispensing stage 10, the specimen accommodating reaction trays 36c are put on the belt conveyer 48 of the second transfer section 8 to move toward the specimen processing module 16 in the X-axis direction.

In the dispensing stage 10, two reaction trays 36A are aligned transversely or perpendicular to the X-axis direction, and the two reaction trays 36A arranged in parallel are transferred by the belt conveyer. Five parallel lines of specimen accommodating reaction trays (ten reaction trays in total) are waiting in the stand-by state in the upstream of the specimen processing module 16, thus assuring smooth, continuous transportation of specimen accommodating reaction trays to the specimen processing module 16.

There is a photo-sensor 47 at the distance of five-parallel line of reaction trays on the upstream side of the specimen processing module 16 to detect a specimen accommodating reaction tray 36c at the upstream end of the five-parallel line of reaction trays. So long as the photo-sensor 47 detects a specimen accommodating reaction tray 36c at the upstream end of the five-parallel line of reaction trays, no specimen accommodating reaction trays 36A can be supplied. In other words, the dispensing of specimen is stopped at the dispensing stage 10, when there are five-parallel line of specimen accommodating reaction trays on the upstream side of the specimen processing module 16.

The dispensing position 10, the location of the provisional stopper 51 in the empty reaction tray standing-by space, and other important positions may be equipped with photo-sensors on the opposite sides, in addition to the photo-sensor on the bottom side, to confirm each position of empty reaction trays 36 with accuracy.

As may be understood from the above, empty reaction trays are transported one after another to the specimen dispensing position 10 without interruption, and the specimen accommodating reaction trays 36c are transferred to a position just before the specimen processing module 16 without interruption. The transporting of reaction trays in two parallel lines and the dispensing of specimen into the so transported reaction trays are effected simultaneously at the interval of several minutes (120 seconds in this particular embodiment). The transporting of specimen accommodating reaction trays to the detection module 32 is effected in synchronous with the intermittent move of the walking beam mechanism described later.

### [4] Dispensing of Specimen into Each Well of Reaction Tray:

Referring to Fig. 6, a specimen dispensing mechanism 11 of the dispensing module 2 performs a dispensing of selected specimen into each well of a selected reaction tray. The specimen dispensing mechanism 11 comprises a dual type specimen injection nozzle unit 14 (14A, 14B), a nozzle drive unit 15, a disposable injection tip container 57 containing 200 or more disposable injection tips 56 (each having a maximum capacity of 700µl) to be attached to a free end of the nozzle in sub-nozzle units 14A, 14B, a specimen rack section 12 supporting a specimen rack 13A containing specimen containers 13 each filled with a selected specimen, and a disposable injection tip collector 57A for removing disposable injection tips 56 from the nozzle of sub-nozzle units 14A, 14B and storing the used injection tips.

The nozzle drive unit 15 comprises an X-axis sub-drive unit 53A for driving each sub-nozzle unit in the direction as indicated by an arrow C, a Y-axis sub-drive unit 54 for driving each sub-nozzle unit in the direction as indicated by an arrow D, and a Z-axis sub-drive unit 55 for driving each sub-nozzle unit in the direction as indicated by an arrow E.

The specimen injection sub-nozzle unit 14A or 14B is an integrated assembly of cylinder, pressure sensor and nozzle, which integrated assembly is called as "contact cylinder nozzle". Each twin sub-nozzle unit 14A or 14B can be driven in the X-, Y-and Z-axis direction independently from the other twin subnozzle unit by the X-axis, Y-axis and Z-axis sub-drive units 53A, 54 and 55.

A disposable injection tip 56 has a tapering shape, and its rear end is somewhat larger in diameter than the nozzle end of nozzles for the twin sub-nozzle unit 14A or 14B.

Now, the dispensing of specimen by the specimen dispensing mechanism 11 shall be explained. First, after confirmed a fact that reaction trays 36A stop in the specimen dispensing stage 10, the twin sub-nozzle units 14A and 14B are moved to and just above the nozzle tip container 57 by the Y-axis nozzle sub-drive unit 54, and then these twin sub-nozzle units 14A and 14B are adjusted finely in both directions indicated by the arrows C and D to come to correct positions relative to selected disposable injection tips 56.

Then, the twin sub-nozzle units 14A and 14B are lowered by the Z-axis sub-drive unit 55 to insert their nozzle ends into the selected tips 56, thereby attaching the tips 56 to the nozzle ends of the sub-nozzle units 14A and 14B. Thereafter, the twin sub-nozzle units 14A and 14B are raised up to a predetermined level.

Next, the twin sub-nozzle units 14A and 14B are transported to and just above the specimen rack section 12 by the X-axis and Y-axis sub-drive units 53A and 54. They may be transported first in the direction as indicated by the arrow C, and then in the direction as indicated by the arrow D, or conversely in the direction as indicated by the arrow D, and then in the direction as indicated by the arrow C, or simultaneously in both directions, that is, in a slant direction.

When the twin sub-nozzle units 14A and 14B come to the specimen rack section 12, the nozzle ends are lowered toward selected specimen containers 13 according to programmed informations of immunoassay or examination items of a selected specimen until their tapering tips 56 are inserted into the selected specimen containers 13, sucking a predetermined amount of the selected specimen to rise up to a predetermined level. Thus, the twin sub-nozzle units 14A and 14B are ready for the dispensing of specimen. The Z-axis sub-drive unit 55 is designed to control the associated twin sub-nozzle 14A or 14B. Therefore, the twin sub-nozzle units 14A and 14B can perform the sucking of the selected specimen independently or concurrently.

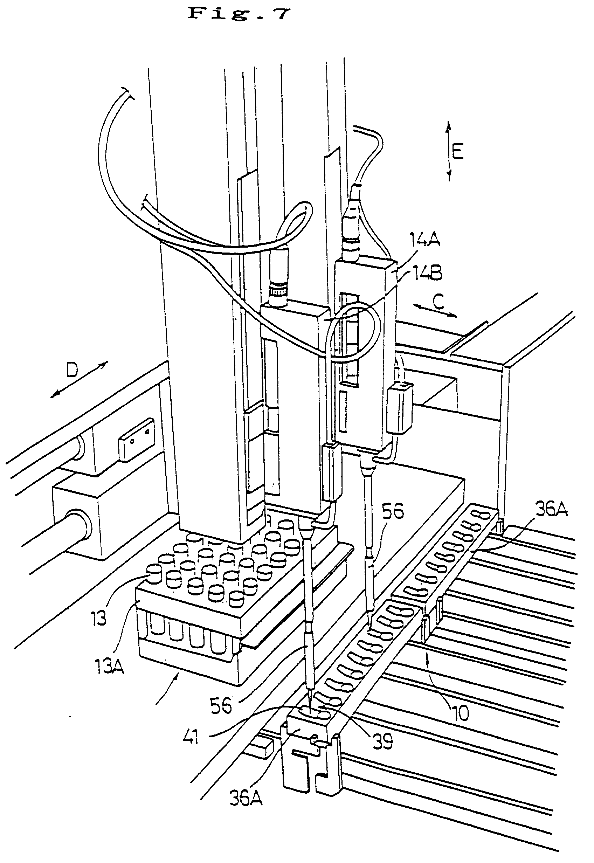

Referring to Fig. 7, the ready-for-specimen distribution twin sub-nozzle units 14A and 14B are transported from the specimen rack section 12 to the specimen dispensing stage 10, particularly to and just above the first cavities 41 of selected wells 39 of a selected reaction tray 36A, which selected wells 39 are determined according to the programmed informations of immunoassay items of the selected specimen. Then, the twin subnozzle units 14A and 14B are lowered to inject the specimen into the first cavities 41 of the selected wells 39 of the reaction tray, and again the twin sub-nozzle units 14A and 14B are raised up to the predetermined level. Thus, a dispensing work is completed. The twin sub-nozzle units 14A and 14B can perform the dispensing of another selected specimen on two selected wells 39 one after another or all together according to the programmed informations of immunoassay items of the selected specimen.

In case of multi-item immunoassay, the twin sub-nozzle units 14A and 14B are transported from the finished dispensing position to the wells 39 which are next selected according to the programmed informations of immunoassay items of the selected specimen, and then the twin sub-nozzle units 14A and 14B are lowered for dispensing on a different immunoassay item of the selected specimen. The dispensing of specimen to each well for the reaction tray is repeated by the number of required immunoassay items.

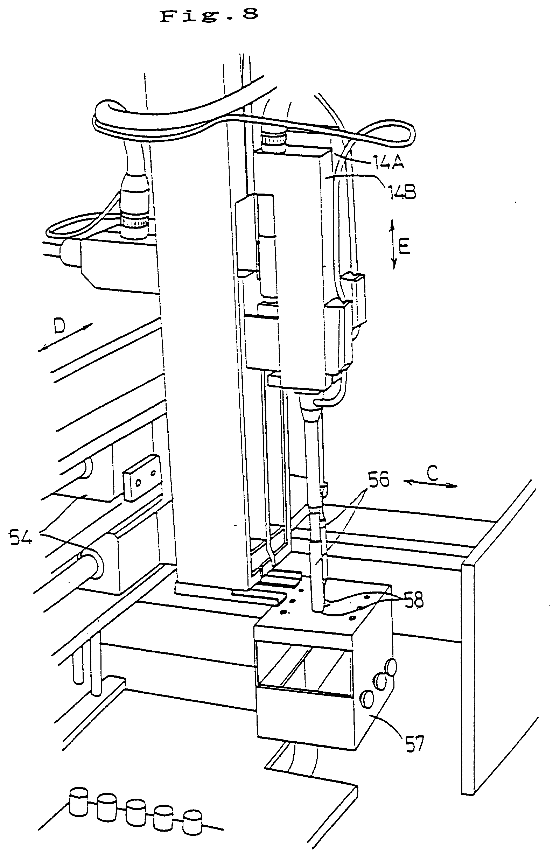

After finishing the dispensing of specimen, the twin subnozzle units 14A and 14B are transported to the nozzle tip collector 57, and the disposable tips 56 are inserted into the holes 58 of the nozzle tip collector 57, and are removed from the nozzle ends of the twin sub-nozzle units 14A and 14B by raising the twin sub-nozzle units 14A and 14B, as seen from Fig. 8. The nozzle tip collector 57 has two boards (not shown) fixed to its ceiling plate around each hole 58 and spring-biased to convert downward, thereby catching the disposable tip when inserted into the hole 58 and removing it from the nozzle end when raised.

Thus, the dispensing of specimen can be effected automatically without intermission, and the dispensing is monitored. Specifically, the twin sub-nozzle units 14A and 14B are equipped with dispensing sensors, which can monitor in terms of pressure, at what level the portion of specimen rises, whether an adequate amount of specimen is sucked, whether the tip is blocked with a certain substance etc. Any trouble if detected, is shown in an appropriate display means (not shown), thereby permitting an operator to stop the dispensing operation for removing the trouble.

### [5] Dilution of Specimen:

Some immunoassay items require dilution of a specimen (serum or the like) by 100 or 200 folds. The specimen requiring dilution can be distinguished from another specimen requiring no dilution by an information given on a predetermined immunoassay item, which is stored in and fed from a data processing module described later.

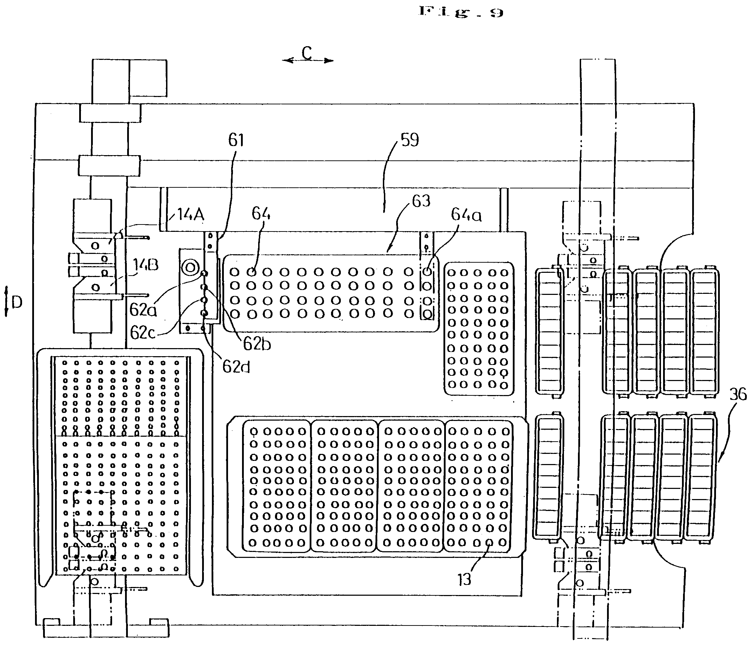

Referring to Fig. 9, a dilution section 59 is placed in the specimen dispensing mechanism 11 (Fig. 6) to extend in the Y-axis direction.

The dilution section 59 comprises a dilution drive unit 60, a four-nozzle unit 61 and a dilution tube rack 63.

The dilution drive unit 60 is designed to drive the four-nozzle unit 61 in the X-axis direction as indicated by an arrow C, and it has four nozzles 62a, 62b, 62c and 62d for ejecting a dilution liquid into selected dilution tubes 64 in the dilution tube rack 63.

The dilution tube rack 63 contains a plurality of dilution tubes 64, say sixty tubes arranged in fifteen lines, four tubes per line (15 x 4). A selected specimen is injected into dilution tubes 64 which are selected on the basis of given informations of immunoassay or examination items of selected specimens. A required dilution is effected in the order of pre-dilution, dispensing of specimen and post-dilution so that the specimen may be stirred by repeating the ejection of dilution liquid.

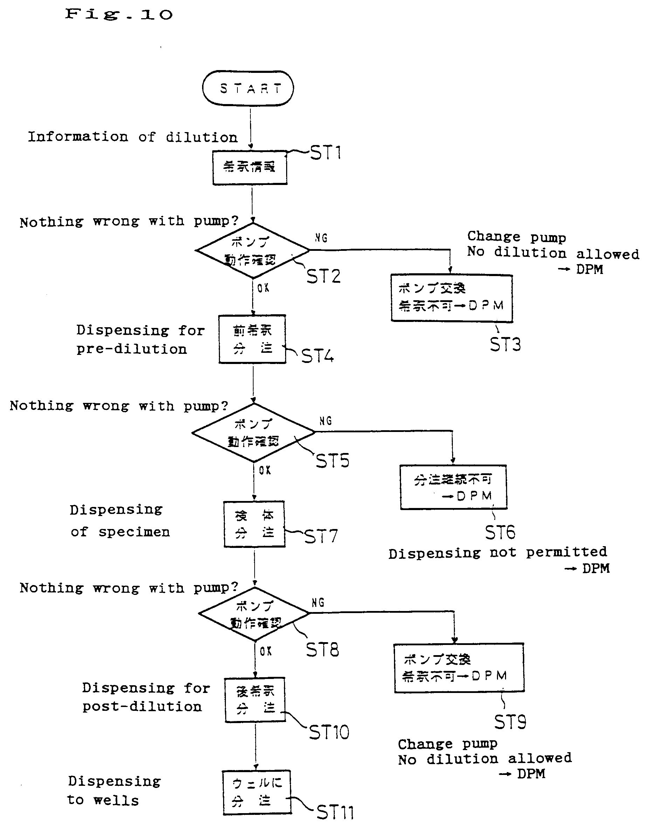

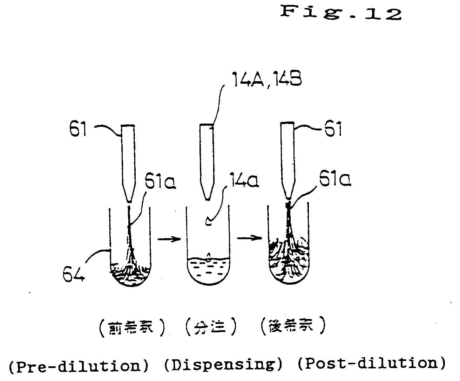

Referring to Figs. 9, 10, 11 and 12, dilution processing shall be explained. The dilution is effected based on informations randomly input for each specimen as to that the dilution is required or not and in accordance with each immunoassay or examination item (ST 1).

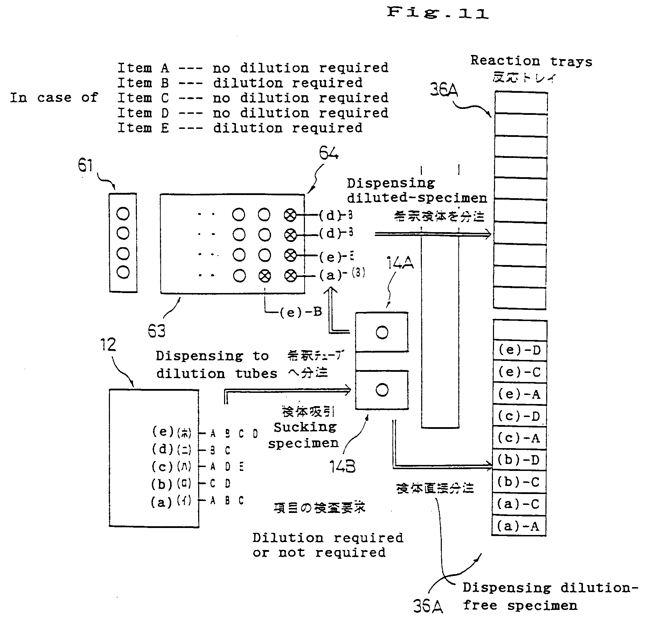

Referring to Fig. 11, some examples of measurement information are shown:
- Item A :: No Dilution Required
- Item B :: Dilution Required
- Item C :: No Dilution Required
- Item D :: No Dilution Required
- Item E :: Dilution Required
Then, assume that specimens a, b, c, d and e in specified specimen containers 13 are programmed to be subjected to following examination items.

| Specimens | Examination items |
|---|---|
| a | A, B, C |
| b | C, D |
| c | A, D, E |
| d | B, E |
| e | A, B, C, D |

First, a check is made as to whether an associated pump works with the aid of sensors for detecting the ejecting of dilution liquid from the pump (ST 2). If the pump does not work, it must be changed, and the dilution can be started after a new pump is ready to operation (ST 3).

If the pump works well, a prior dilution is effected. Then, the four-nozzle unit 61 injects a half amount of dilution liquid into each of dilution tubes 64 of the number of dilutions required. If desired, the amount of pre-dilution liquid can be changed by programming appropriately (ST 4).

The dilution is required on (a) for item B, (c) for item E, (d) for items B and E, and (e) for item B, so that 5 dilution tubes 64 is necessary (see cross-marked tubes in Fig. 11).

The dispensing of dilution liquid is effected by the four-nozzle unit 61, specifically by adjusting the ejection angle and the ejection amount (100 µl in this particular embodiment) of each nozzle and by repeating the ejection of dilution liquid from each nozzle. The pre-dilution has the effect of stirring and homogenizing the specimen to be diluted, without allowing sticking of specimen on the tube wall.

The pumping operation is watched all the time in the course of pre-dilution, and if any malfunction is caused, the dispensing is stopped immediately (ST 5, ST 6).

Next, the twin sub-nozzle units 14A and 14B suck each specimen for the examination item requiring the dilution to inject it into selected dilution tube 64 without injecting it into the reaction tray, and then each specimen for the examination item requiring no dilution is dispensed into selected wells of a reaction tray (ST 7).

After the dispensing, a check is made on the pumping operation (ST 8), and if something is wrong with the pump, the subsequent dilution is stopped, and the pump is changed (ST 9).

When the specimen is sucked, the twin sub-nozzle units 14A and 14B is transferred to the dilution section 59 for effecting a dispensing of the dilution liquid into the predetermined dilution tubes, in response to the examination item requiring the dilution. A batch of specimens (200 specimens in the embodiment) has been treated in such a manner.

In connection with this dispensing, each of the specimens is injected into the concerned dilution tube 65 (the specimen a is injected into the tube for examination item B, specimen c is for examination item E. specimen d is for examination items B and E, and specimen e is for examination item B).

After the dispensing of each specimen into the concerned dilution tube 64, the post-dilution is effected. The post-dilution means that a remaining amount of the dilution liquid is injected into each of the dilution tube to further dilute the specimen, so that it will have a predetermined concentration. Namely, the remaining amount of dilution liquid is injected from the four-nozzle unit 81 to stir the specimen in the concerned dilution tubes 64 (ST 10). According to the illustrated embodiment, the post-dilution is effected on the dilution tubes 64 marked with cross-symbols in Fig. 11.

The twin sub-nozzle units 14A and 14B which have effected the dispensing of the specimens into the predetermined dilution tubes 64 at the dilution section 59, are then transferred to the dispensing position to directly effect the dispensing of specimens on examination items requiring no dilution.

As shown in Fig. 11, namely, the specimens requiring no dilution for examination items A, C and D are dispensed into wells for the reaction tray 36A, in a order from the lower reaction tray in the Figure (The specimen a is injected to wells for examination items A and C, specimen b is for examination items C and D, specimen c is for examination items A and D, and specimen e is for examination items A, C and D.

Each of the diluted specimens and accommodated in the concerned dilution tube 64 (cross-marked tubes in Fig. 11) is sucked by the twin sub-nozzle units 14A and 14B to inject the same into the concerned well of the reaction tray 36A (ST 11).

The above mentioned two-stage dilution is significant for the immunoassay, since the dilution of specimen and stir of the mixture can be concurrently effected without use any separate stirrer.

### [6] Walking Beam Mechanism:

There are two different type of walking beam mechanisms. One of the walking beam mechanisms uses (1) a belt type of forward-and-backward moving mechanism, whereas the other walking beam mechanism uses (2) a cam type of forward-and-backward moving mechanism.

### (1) Belt type walking beam mechanism

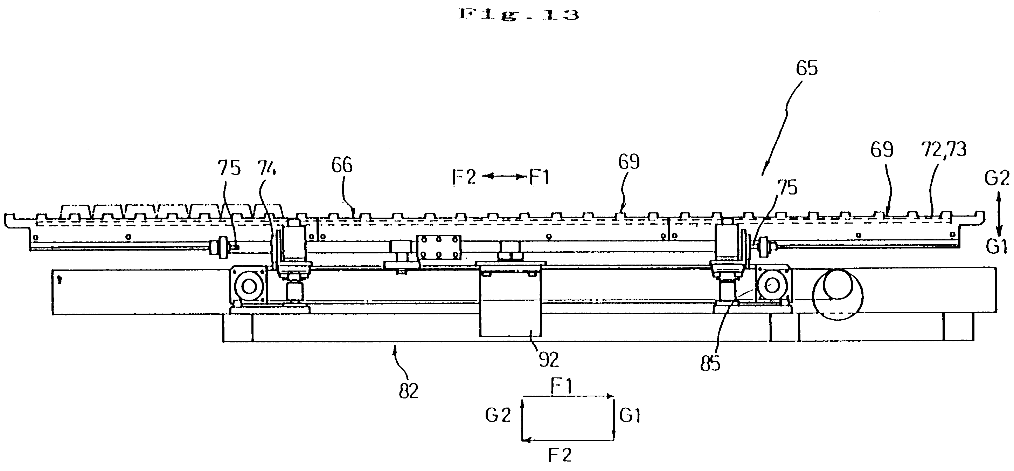

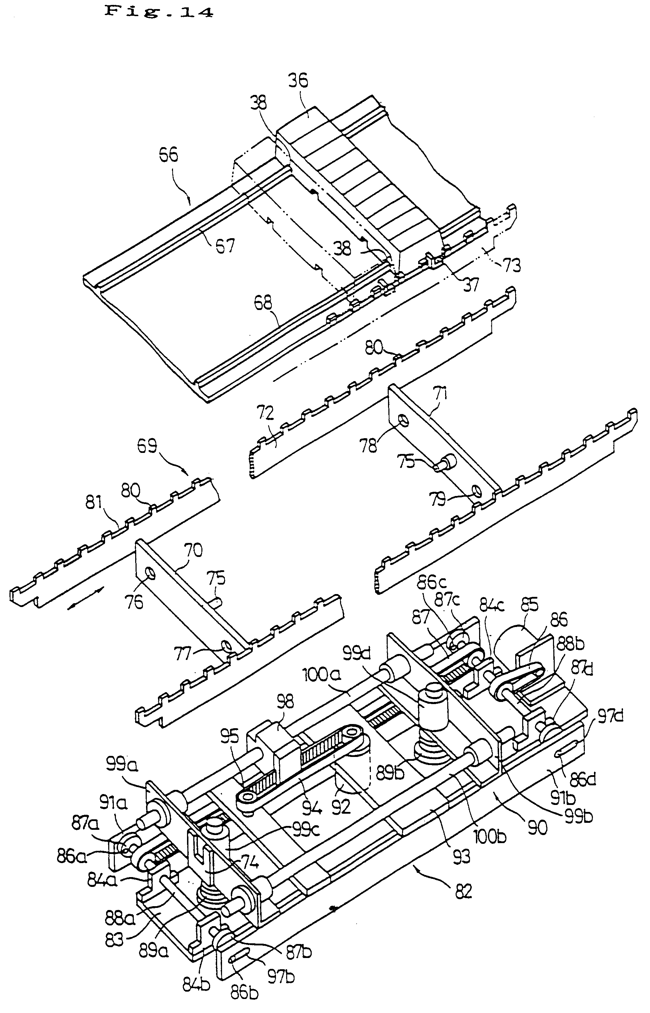

Referring to Figs. 13 and 14, a belt type walking beam mechanism 65 comprises a reaction tray guide section 66, a reaction tray transfer section 69 and a drive section 82 for driving the reaction tray transfer section 69.

The reaction tray guide section 66 is an elongated flat plate lying over the drive section 82, and having two parallel guide rails 67 and 68 on its upper surface, to which the guide slots 38, 38 of reaction trays fit.

The reaction tray transfer section 69 comprises two transfer beams 72 and 73 longitudinally extending in parallel on the opposite sides of the reaction tray guide section 66 and a pair of cross beams 70 and 71 fixed to the opposite transfer beams 72 and 73 to keep them at fixed interval.

Each of cross beams 70, 71 has a center projection 75 functioning as an origin sensor 74 and engagement holes 76, 77 or 78, 79 for forward-and-backward movement transmission on the opposite sides of the center projection 75.

Each of transfer beams 72, 73 has projections 80 arranged along its upper longitudinal edge at regular intervals for catching the opposite engagement pieces 37 of the reaction tray 36 to transfer forward. The interval 81 at which these projections 80 are arranged corresponds to the width of the reaction tray 36.

The drive section 82 is designed to provide a "D"-motion, and is composed mainly of a rectangular base plate 83 and a swing mechanism 90, which can provide a vertical and horizontal movements.

The rectangular base plate 83 has projections 84a, 84b, 84c and 84d at its four corners, and a motor 85 at one end of the base plate 83 for driving the swing mechanism 90. These projections 84a, 84b, 84c and 84d bear axles 88a and 88b each having a rotary disk 87a, 87b, 87c or 87d on either end. Each rotary disk has an eccentric rod 86a, 86b, 86c or 86d thereon. One axle 88b is connected to the shaft of the motor 85 by an endless belt 86, and the other axle 88a is connected to the axle 88b by an endless belt 87.

The swing mechanism 90 is attached to the rectangular base plate 83 with its up-and-down axles 89a and 89b standing thereon.

The swing mechanism 90 comprises two up-and-down beams 91a, 91b extending parallel with the opposite sides of the rectangular base plate 83, a cross beam 93 for mounting a motor 92, a cross beam 96 for attaching a rotor 95 and a pair of angle brackets 99a and 99b. The shaft of motor 92 appears on the cross beam 93, and connected to the rotor 95 by an endless belt 94.

The swing mechanism 90 comprises further bearings 99c, 99d fixed to the centers of the angle brackets 99a and 99b, thereby bearing the up-and-down axles 89a and 89b, origin indicators 74 and 75 fixed to the angle brackets 99a and 99b on the side which is opposite to the side on which the bearings 99c, 99d are fixed, a pair of rods 100a and 100b slidingly fixed to the opposite ends of each of the angle brackets 99a and 99b, and a horizontal-move transmission member 98 fixed to the rod 100a at the middle position of the endless belt 94.

The swing mechanism 90 is combined with the rectangular base plate 83 by inserting the eccentric rods 86a, 86b, 86c and 86d of the rotary disks 87a, 87b, 87c and 87d in the slots 97a, 97b, 97c and 97d of the up-and-down beams 91a and 91b.

The reaction tray transfer section 69 is combined with the swing mechanism 90 by inserting the rods 100a and 100b in the engagement holes 76, 77, 78 and 79 of the cross beams 70 and 71 and by fixing the rods 100a and 100b to the cross beams 70 and 71, and the reaction tray guide section 66 is combined with the reaction tray transfer section 69 by fitting the reaction tray transfer section 66 in the space between the opposite transfer beams 72 and 73, and the reaction tray guide section 66 is fixed to the rectangular base plate 83 by appropriate means. Thus, the walking beam mechanism 65 is assembled.

In operation, that is, in moving reaction trays 36 forward, first, the motor 85 is put in operation to rotate the axles 88a and 88b and hence, the rotary disks 87a, 87b, 87c and 87d, thereby causing the eccentric rods 86a, 86b, 86c and 86d to raise the beams 91a and 91b, and hence the swing mechanism 90. Thus, the reaction tray transfer section 69 is raised in the direction as indicated by an arrow G2 (Fig. 13), permitting the projections 80 of the beams 72 and 73 to abut against the rear side of each engagement piece 37 of every reaction tray in the specimen processing module 16 (Fig. 1). By putting the motor 92 in operation, the beams 72 and 73 are moved in the direction as indicated by an arrow F1 (Fig. 13) through the endless belt 94, the transmission member 98 and the rods 100a and 100b, thus causing all reaction trays 36 to slidingly advance by one step, that is, a distance corresponding to the width of the reaction tray. The whole step-by-step transfer distance is determined by the reaction condition at the predetermined temperature kept by the heating panel later described, and by positions at which reagents are poured.

One step advance can be made by the transfer beams 72 and 73, and the step length is determined by a distance which the projection 75 of the cross beam 70 moves before abutting against the origin sensor 74. In the position in which the transfer beams 72 and 73 stop, the up-and-down drive motor 85 starts rotating to descend the up-and-down beams 91a and 91b via the axles 88a and 88b, thereby descending the reaction tray transfer section 69 in the direction as indicated by an arrow G1 (Fig. 13) to leave all reaction trays 36 motionless in the stopping position.

While the reaction tray transfer section 69 remain at a descendent level, it goes back one step in the direction in which the horizontal-movement transmission member 98 moves back as indicated by an arrow F2 (Fig. 13) by the counter-rotating of the motor 92 of the swing mechanism 90, leaving the reaction trays 36 behind, and then the walking beam mechanism is ready to move subsequent reaction trays forward. This operation is repeated to transfer reaction trays intermittently without being subjected to shock. The position in which selected reaction trays 36 stop after one-step advance corresponds to the reagent dispensing position, in which reagent can be injected into such selected reaction trays by the reagent dispensing mechanism, as later described in Chapters [7] and [8].

### (2) Cam type walking beam mechanism

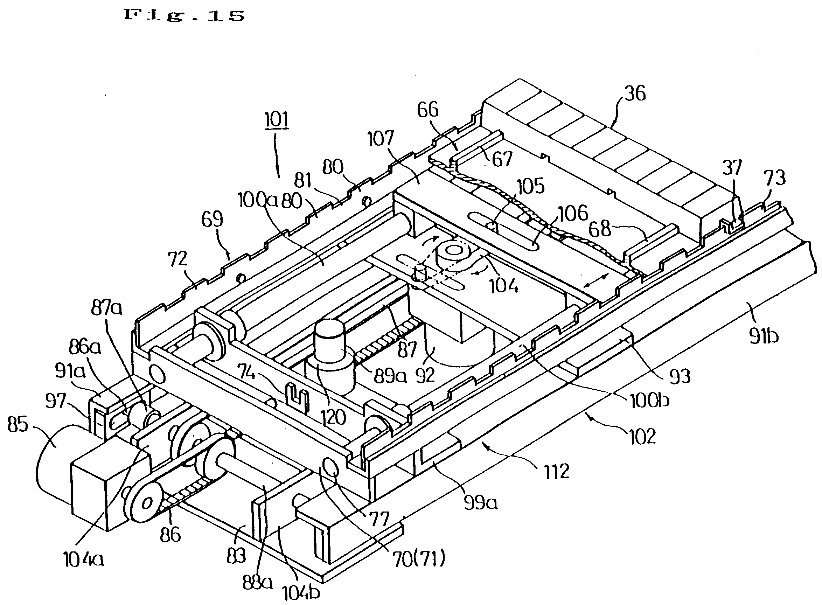

A cam type walking beam mechanism has a similar structure as the belt type one as described above, and therefore, same reference numerals are given to same elements in Fig. 15, and descriptions of such elements in common are omitted.

In the belt type walking beam mechanism the swing mechanism is moved back and forth by an endless belt, whereas in the cam type one, the swing mechanism is moved back and forth by a horizontal-drive motor and associated cams.

As shown in Fig. 15, the cam type walking beam mechanism 101 is mainly composed of a reaction tray guide section 66, a reaction tray transfer section 69 and a drive section 102, which functions to drive the reaction tray transfer section 69. The mechanism is characterized by structure of the drive section 102.

The drive section 102 is designed to provide a "D" motion as in the case of the belt type walking beam mechanism, and is composed of a rectangular base plate 83 and a swing mechanism 112.

A pair of elongated bearing boards 104a and 104b are fixed on the base plate 83, and an up-and-down drive motor 85 is fixed on one end of the rectangular base plate 83 for raising and descending the swing mechanism 112 as a whole.

These parallel bearing boards 104a and 104b bear axles 88a and 88b. Each axle 88a or 88b has a rotary disk 87a, 87b or 87c, 87d on either end, and each rotary disk has an eccentric rod 86a, 86b, 86c or 86d. One axle 88a is connected to the shaft pulley of the drive motor 85 by an endless belt 86, and the other axle 88b is connected to the axle 88a by another endless belt 87. Up-and-down axles 89a and 89b for raising and descending the swing mechanism 112 are fixed to the rectangular base plate 83, as similar to the previous embodiment.

The swing mechanism 112 has two parallel up-and-down beams 91a and 91b extending parallel to the longitudinal opposite sides of the rectangular base plate 83, and a back-and-forth drive motor 92 is fixed on the rectangular base plate 83 between the parallel up-and-down beams 91a and 91b. Cross bearing brackets 99a and 99b bear the up-and-down axles 89a and 89b. The eccentric rods 86a, 86b, 86c and 86d are inserted in the slots 97a, 97b, 97c and 97d of the parallel up-and-down beams 91a and 91b to raise and descend the parallel up-and-down beams 91a and 91b when the axles 88a and 88b rotate. The structure described so far is similar to the preceding embodiment.

The difference from the previous embodiment lies in that the back-and-forth drive motor 92 has an arm 104 fixed to its shaft, and the arm 104 has a projection 105 integrally fixed to its end. In this case, length of the arm and in other words, the length between the shaft of the motor 92 and center of the projection 105 is equal to one half of the width of the reaction tray 36, that is, one half of one step discussed for the preceding embodiment. When the motor 92 rotates to bring the arm 104 to the opposite position as shown by phantom lines (180 degree rotation), the projection 105 is moved one step apart from the projection in the first position shown by solid lines.

Since the cam mechanism is adopted for back-and forth driving transmission, driving mechanism for a pair of rods 100a and 100b is somewhat different. Namely, a cross transmission board 107 bridges over the space between two opposite rods 100a and 100b, and is connected thereto. The cross transmission board 107 has an elongated slot 106, and the projection 105 is inserted in the elongated slot 106, which is at least one step long. In this case, it is preferable to arrange the cross transmission board in the position near middle of the rods, in longitudinal direction thereof.

The elongated slot 106, in which the projection 105 engages, has length of at least of about 1 step, and the projection 105 moves along inner edge of the elongated slot 106, when the arm 104 is rotated by the drive motor 92, with a predetermined locus.

Assume that the projection 105 is located at the center of the elongated slot 106 as shown, and that the motor 92 rotates by 90 degrees in clockwise. Then, the projection 105 comes to one (right) end of the elongated slot 106. When the motor 92 further rotates by another 90 degrees in clockwise, the projection 105 comes to the opposite position as shown by phantom lines, in which opposite position the projection 105 is located at the center of the elongated slot 106. One rotation of the motor 92 will cause the projection 105 to move from one end to the other end of the elongated slot 106, and the transfer of the projection 105 from the center to center position in the elongated slot 106 will cause the cross transmission board 107 to move one step, thus moving the parallel round bars 100a and 100b and hence the reaction tray transfer section 69 one step back and forth.

The cam type walking beam mechanism 101 performs vertical and horizontal movements (a rise-advance-descent-retreat movement), thus moving slidingly reaction trays step by step, as is the case of the preceding embodiment.

An incubator using either type of walking beam mechanism is described below in Chapter [7].

### [7] Dispensing of Reagent(s) and Incubation:

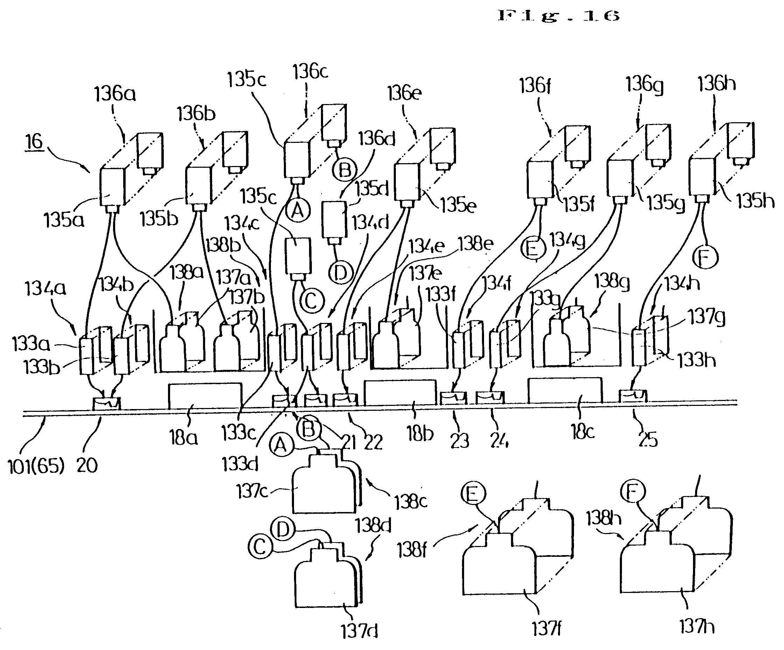

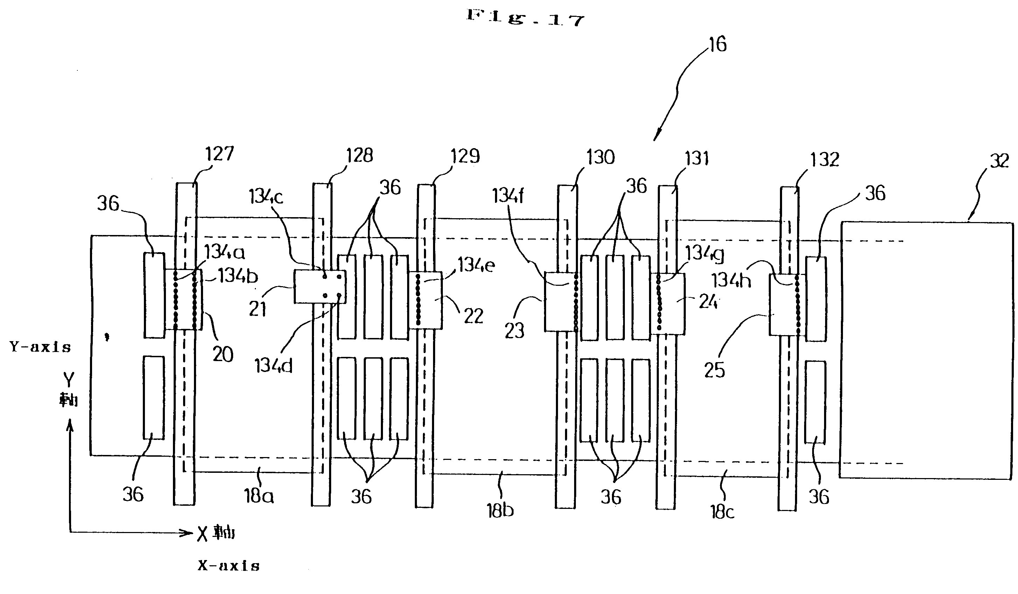

Incubation is effected in the specimen processing module. Referring to Figs. 16 and 17, heat panel mechanism 18 and the first-, second-, third-, fourth-, fifth- and sixth-axis reagent injection units 20, 21, 22, 23, 24 and 25 are arranged at appropriate positions along the walking beam mechanism 101 (65).

The heat panel mechanism 18 comprises the first heat panel unit 18a placed between the first- and second-axis reagent dispensing stages 20 and 21; the second heat panel unit 18b placed between the third- and fourth axis reagent dispensing stages 22 and 23; and the third heat panel unit 18c placed between the fifth- and sixth axis reagent dispensing stages 24 and 25.

These first, second and third heat panel units 18a, 18b and 18c have a tunnel-like shape, allowing reaction trays 36 to pass through the tunnel-like spaces. The lengths of these tunnel-like spaces are determined to keep travelling reaction trays at a predetermined temperature in consideration of the distance which reaction trays are moved and the speed at which reaction trays are moved by the walking beam mechanism 101 (65).

The first-, second-, third-, fourth-, fifth- and sixth-axis reagent injection units 20, 21, 22, 23, 24 and 25 are attached to the first-, second-, third-, fourth-, fifth- and sixth-axis injection nozzle drives 127, 128, 129, 130, 131 and 132 respectively. Each injection nozzle drive can move an associated reagent injection unit in the direction (the Y-axis direction) transverse of the direction (the X-axis direction) in which reaction trays travel. Each reagent injection unit 20, 21, 22, 23, 24 or 25 is made up into a set consisting of a nozzle, an electric-powered pump and a bottle in a constant temperature bath. All injection nozzle drives 127, 128, 129, 130, 131 and 132 are controlled in the Y-axis direction to inject into reaction trays 36 at same lateral positions. While injecting the reagent, the remaining amount of reagent in each bottle is determined by counting injection times. The nozzles can be changed freely.

The first-reagent injection unit 20 is composed of two injection sets, one set comprising a nozzle group 134a including ten nozzles 133a, a pump group 136a including ten pumps 135a each associated with a selected nozzle 133a, and a bottle group 138a including two bottles 137a allotted to each pump 135a.

The other set comprises a nozzle group 134b including ten nozzles 133b, a pump group 136b including ten pumps 135b each associated with a selected nozzle 133b, and a bottle group 138b including two bottles 137b allotted to each pump 135b.

The second-reagent injection unit 21 is composed of two injection sets, one set comprising a nozzle group 134c including two nozzles 133c, a pump group 136c including two pumps 135c associated with the nozzles 133c, and a bottle group 138c including two bottles 137c allotted to each pump 135c.

The other set comprises a nozzle group 134d including two nozzles 133d, a pump group 136d including two pumps 135d associated with the nozzles 133d, and a bottle group 138d including two bottles 137d allotted to each pump 135d.

The nozzle groups 134a, 134b, 134c and 134d have an area sensor (not shown) for monitoring the ejection of reagent and the washing of the nozzle all the time.

The third-reagent injection unit 22 is composed of one injection set which comprises a nozzle group 134e including ten nozzles 133e, a pump group 135e including ten pumps 135e associated with the nozzles 133e, and a bottle group 138e including ten bottles 137e each allotted to each pump 135e.

The fourth-reagent injection unit 23 is composed of one injection set which comprises a nozzle group 134f including ten nozzles 133f, a pump group 136f including ten pumps 135f each associated with each nozzle 133f, and a bottle group 138f including ten bottles 137f each allotted to each pump 135f.

The fifth-reagent injection unit 24 is composed of one injection set which comprises a nozzle group 134g including ten nozzles 133g, a pump group 136g including ten pumps 135g each associated with each nozzle 133g, and a bottle group 138g including ten bottles 137g each allotted to each pump 135g.

The sixth-reagent injection unit 25 is composed of one injection set which comprises a nozzle group 134h including ten nozzles 133h, a pump group 136h including ten pumps 135h each associated with each nozzle 133h, and a bottle group 138h including ten bottles 137h each allotted to each pump 135h.

With this arrangement, the specimen processing module 16 can perform selective reagent injections into the reaction trays and washing of immunoreaction product in selected wells 39 of selected selected reaction trays 36 according to given informations for each immunoassay or examination items on a specified specimen.

Specifically, the nozzle groups of the first-, second-, third-, fourth-, fifth- and sixth-axis reagent injection units 20, 21, 22, 23, 24 and 25 inject selected reagents into the wells of specimen accommodating reaction trays (which are addressed on the basis of specimen information) at regular time intervals within the pause of the step-by-step transfer of specimen accommodating reaction trays. In other words, the dispensing of reagent has not been concurrently effected to wells on each reaction trays, but is effected to the first designated and then subsequent designated wells, one by one at regular time interval, so that all of the dispensing is finished within a period of time, during which step-by-step sliding transfer of the reaction trays stops.

Likewise, the measurement of luminescence on each well of a selected reaction tray is effected at regular time intervals in the detection module, as described later.

Referring to Fig. 17, the operation of each of the first-, second-, third-, fourth-, fifth- and sixth-axis reagent injection units 20, 21, 22, 23, 24 and 25 shall be described.

The nozzle groups 134a and 134b of the first-axis reagent injection unit 20 are fixed to the Y-axis nozzle drive 127 for each nozzle of one group to face each corresponding nozzle of the other group, and these nozzles can inject at most ten different reagents into selected reaction trays 36 in the pause of the step-by-step transfer of reaction trays effected by the walking beam mechanism in the X-axis direction.

Reagents are selectively injected into the wells of each reaction tray 36 on the basis of given specimen information, and injections of so selected reagents into reaction trays are effected at regular time intervals in each of the reagent injection units 20, 21, 22, 23, 24 and 25.

Conditions of such dispensing can be controlled for each reagent injection unit, and same condition may be selected to increase efficiency of the dispensing.

The nozzles 133a and 133b are selected from the nozzle groups 134a and 134b on the basis of specimen information given by the specimen dispensing module, and as shown in Fig. 18, the so selected nozzles are put in such an angular position that they can inject simultaneously two different reagents into the first cavity 40 of a selected well of a reaction tray 36.

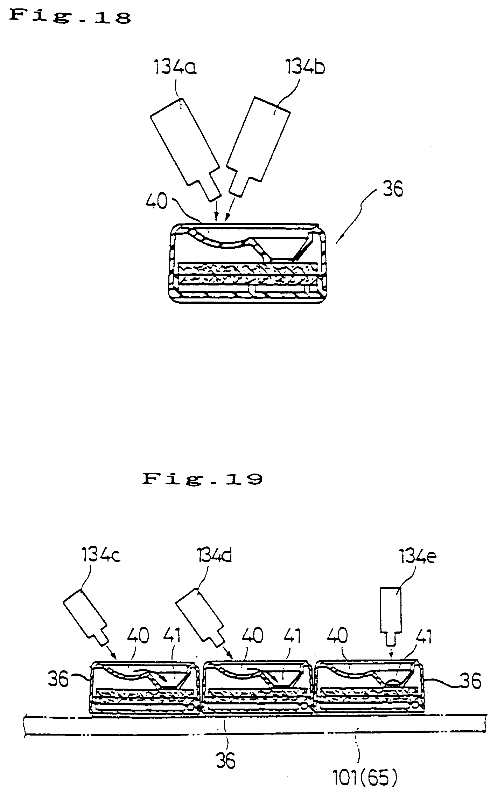

As shown in Fig. 17, the nozzle groups 134c and 134d are integrally connected to the Y-axis stepping drive 128 of the second axis, and in the pause of the step-by-step transfer of the reaction trays by the walking beam mechanism 101 (65) in the X-direction, nozzles are selected from these nozzle groups 134c and 134d, and the so selected nozzles can inject buffer liquid into the first cavities 40 of selected wells to transfer the reagent-reacted specimen into the second cavities of the wells. As shown in Fig. 19, in the first pause of the step-by-step transfer of reaction trays, a nozzle selected from the nozzle group 134c injects a transfer buffer liquid A into the first cavity 40 of a selected well, thus transferring the reagent-reacted specimen into the second cavity 41 of the selected well, and then in the second pause of the step-by-step transfer of reaction trays, a nozzle is selected from the nozzle group 134d, and the so selected nozzle injects a transfer buffer liquid B into the first cavity 40 of the well to transfer the remaining reagent-reacted specimen into the second cavity 41 of the well, thus washing the first cavity 40 of the well to leave no remaining amount therein.

As shown in Fig. 17, the nozzle group 134e is integrally connected to the Y-axis stepping drive 129 of the third-axis injection unit 22, and in the pause of the step-by-step transfer of reaction trays in the X-axis direction, the nozzle group 134e can effect selective injections of at most ten reagents. Again referring to Fig. 19, a nozzle selected from the nozzle group 134e injects a reagent which is capable of generating a marking when added to the reagent-reacted specimen, which is transferred to the second cavity 41 by the wash buffer at the pre-stage. This corresponds to a conjugate in the two-step assay line described later, and to a probe in the three-step assay line.

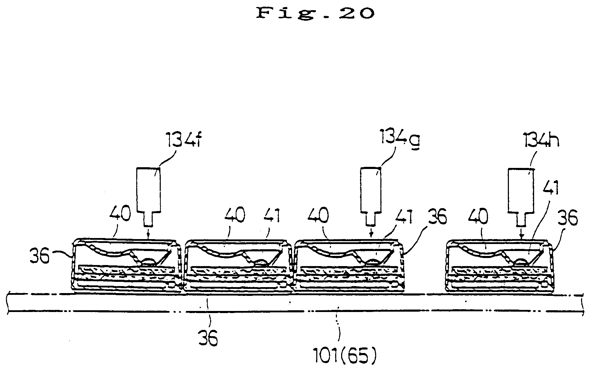

As shown in Fig. 17, the nozzle group 134f is integrally connected to the Y-axis stepping drive 130 of the fourth-axis injection unit 23, and as shown in Fig. 20, in the pause of the step-by-step transfer of reaction trays in the X-axis direction, the nozzle group 134f can effect selective injections of at most ten reagents into selected wells at regular time intervals. This corresponds to the first wash buffer in the assay line described later.

As shown in Fig. 17, the nozzle group 134g is integrally connected to the Y-axis stepping drive 131 of the fifth-axis reagent injection unit 24. As shown in Fig. 20, in the pause of the step-by-step transfer of reaction trays, the nozzle group 134g can effect selective injections of at most ten reagents into selected wells. This corresponds to a conjugate in the three-step assay line described later. Nothing is done in the two-step assay line.

As shown in Fig. 17, the nozzle group 134h is integrally connected to the Y-axis stepping drive 132 of the sixth-axis reagent injection unit 25.

As shown in Fig. 20, in the pause of the step-by-step transfer of reaction trays in the X-axis direction, the nozzle group 134h can effect selective injections of at most ten reagents into selected wells at regular time intervals. This corresponds to the second wash buffer in the assay line described later.

As may be understood from the above, selective injections and washings in the reagent injection units 20, 21, 22, 23, 24 and 25 are effected synchronously with the step-by-step transfer of reaction trays 36 effected by the walking beam mechanism 101 (65) in the X-axis direction by moving the nozzle groups 134a, 134b, 134c, 134d, 134e, 134f, 134g and 134h in the Y-axis direction to perform required injections and washings at regular time intervals during the pause of the step-by-step transfer of reaction trays. Thus, the random access is permitted to a lot of reaction trays 36 at controlled time.

Specific examples shall be explained in more detail together with a time schedule. First, after being poured with selected specimens in the dispensing module 2, two lines of reaction trays 36 are intermittently and slidingly transferred by the walking beam mechanism 101 (65) in the specimen processing module 16. Specimen accommodating reaction trays in two lines stop at the first-axis reaction injection unit 20 for 120 seconds. These reaction trays will stop sequentially at each of the other reagent injection units 21, 22 of the second- and third-axes, reagent injection units 23, 24 of the fourth- and fifth-axes, and reagent injection unit 26 of the sixth-axis, and finally reagent injection unit of the seventh-axis (later described) for 120 seconds.

For the 120 second pause time, the ten-nozzle groups 134a, 134b, 134e, 134f, 134g, 134h and the two-nozzle groups 134c and 134d perform selective injections and washings at regular time intervals of 5.5 seconds on the basis of the specimen information given from the dispensing module 2, while moving intermittently in the Y-axis direction. Also, the nozzle group of the seventh-axis described later performs injections of a trigger reagent at regular time intervals of 5.5 seconds, which trigger reagent is capable of generating a luminescence when added to the reagent-reacted specimen for permitting the immunoassay measurement in terms of intensity of the chemiluminescence.

All nozzle groups are driven step-by-step simultaneously by the injection nozzle drive units 127, 128, 129, 130, 131 and 132 in the Y-axis direction. Therefore, each of twenty wells 39 of two reaction trays arranged laterally in series will be subjected to injections and washings at regular time intervals in the pause of the step-by-step transfer of the reaction trays, and the specimen of each well will undergo a controlled incubation under same condition.

It will take 110 seconds (= 5.5 seconds x 20 wells) to complete the dispensing into the twenty wells 39 of two reaction trays 36 arranged laterally in series or washing immunoreaction product in the wells. The time interval of step-by-step transfer for the reaction trays is 120 seconds-long, and therefore, after the 110 second-long dispensing or washing there remains 10 seconds. For the 10 second-long time, all reaction trays are slidingly moved forward in the specimen processing module 16. In the detection module 32 described later, the reaction trays of which required measurements are finished and will be returned to an associated transfer means for disposing within the 10 second-long period of time.

### [8] Assay Lines:

Use may be made of (1) two-step or (2) three-step assay line to effect reagent injections and incubations in the multi-item immunoassay system. Selected specimen starts immunoreaction immediately after being injected a first reagent into reaction trays which accommodate the specimen.

### (1) Two-Step Assay Line:

In the assay format for in this assay line, glass particles, styrene beads or any other micro-particles (µP) and assay buffer (AB) are added to specimen accommodating reaction trays, allowing the mixture to incubate for a predetermined period of time (for instance, 20 minutes).

Resulting incubated substance of an antibody in the specimen and microparticles is transferred from the first cavity to the second cavity by injecting transfer buffers A and B at regular time intervals for instance of 2 minutes.

Then, a conjugate is added to the second cavity to incubate for a predetermined period of time, for instance, 16 minutes at a constant temperature.

Thereafter, the first washing is effected by a washing buffer. Then, further incubation is permitted at a constant temperature for a predetermined period of time, say, 14 minutes. The second washing is effected by a washing buffer, and a trigger reagent is added within the dark room of the detection module to measure an intensity of the chemiluminescence generated by the immunoreacted specimen.

### (2) Three-Step Assay Line:

The assay format for this assay line is similar to the two-step assay line just described, and switching is made dependent on which measurement or examination item is selected. Namely, glass particles, styrene beads or any other micro-particles (µP) and assay buffer (AB) are added to specimen-injected reaction trays to incubate for a predetermined period of time (for instance, 20 minutes).

Resulting incubated substance of an antibody in the specimen and microparticles is transferred from the first cavity to the second cavity by injecting transfer buffers A and B at regular time intervals for instance, of 2 minutes.

Then, to the incubated substance in the second cavity, a probe reagent is added to incubate for a predetermined period of time, for instance 16 minutes at a constant temperature. After washed with a washing buffer, a conjugate is added to incubate for a predetermined period of time, say 10 minutes and and at a constant temperature.

Thereafter, the first washing is effected by a washing buffer. Then, further incubation is permitted at a constant temperature for a predetermined period of time, say, 14 minutes. The second washing is effected by a washing buffer, and a trigger reagent is added within the dark room of the detection module to measure an intensity of the chemiluminescence generated by the specimen.

### [9] Measurement in Terms of Luminescence:

The intensity of chemiluminescence from specimen is determined in the detection module 32 as seen from Fig. 1.

The detection module 32 may use (1) an extra transfer means or (2) an extension from the walking beam mechanism.

### (1) Detection module equipped with extra transfer means:

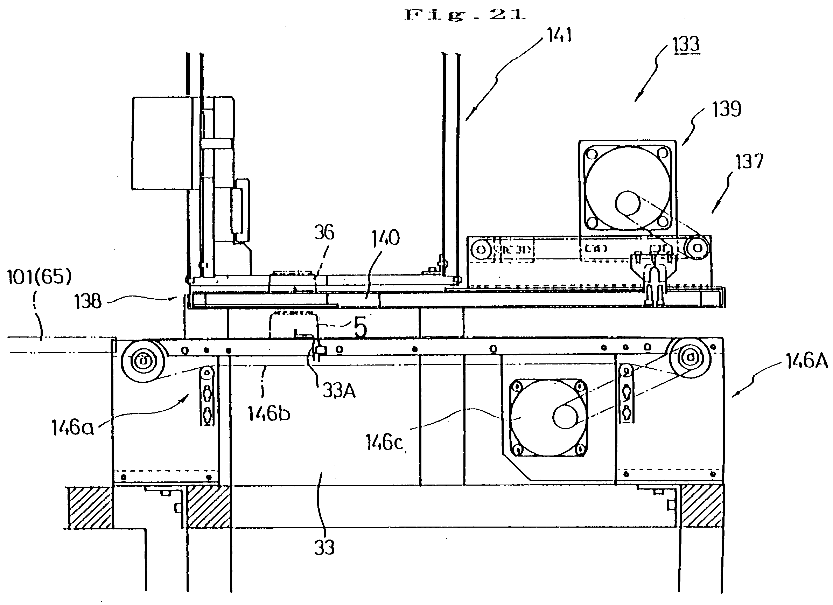

As shown in Fig. 21, a detection module 133 comprises a transfer section 146A, an opening-and-closing control section 137 and a measuring section 141.

The transfer section 146A is composed of a reaction tray transfer unit 146a and a vertical drive section 33.

The reaction tray transfer unit 146a comprises a transfer belt 146b for transferring reaction trays 36, which are transported from the specimen processing module 16 to the transfer belt 146b by the walking beam mechanism 101 (65).

Specifically, the reaction trays 36 each bearing a selected specimen reacted with a selected reagent(s) added in the specimen processing module 16 are transported into an entrance opening of the detection module. Then, the reaction trays 36 are raised into the specimen measuring section 141 for the purpose of measurement, and after measurement, the reaction trays 36 are transported to the disposing position where they are disposed. The transfer system uses a drive motor 146c for transporting reaction trays 36 synchronously with the walking beam mechanism 101 (65).

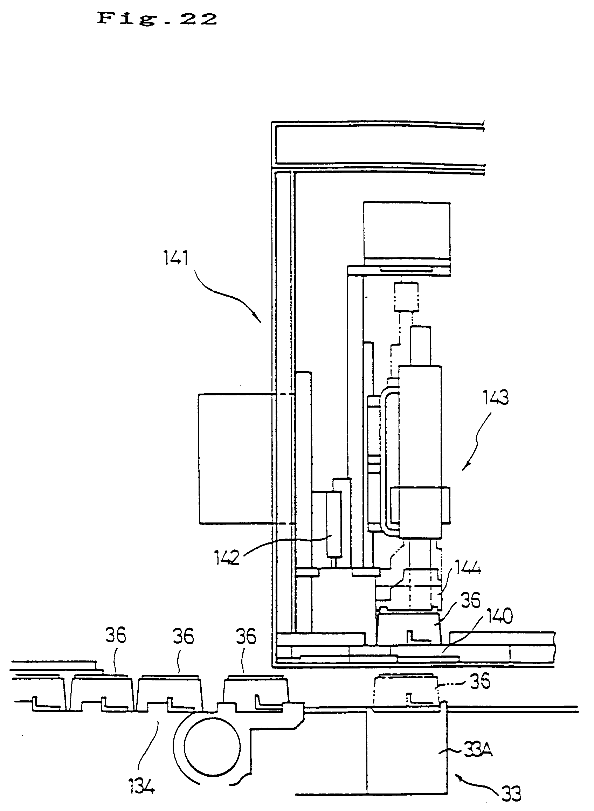

As shown in Fig. 22, the vertical drive section 33 comprises a vertical guide-drive mechanism 33A for raising and lowering two reaction trays 36 from the specimen measuring section 141, which two reaction trays 36 are arranged laterally in series and are received and carried by the reaction tray transfer unit 146a. The vertical movement of reaction trays is effected synchronously with the bottom opening of the specimen measuring section 141 as described later.

As shown in Fig. 21, the opening-and-closing control section 137 comprises a closure control 139 for actuating a shutter mechanism 138.

The shutter mechanism 138 has a shutter plate 140. It is operated by the closure control 139 to close and open an opening 138. The operation of closure control 139 is synchronized with that of the vertical drive section 33. Specifically, when being raised by the vertical guide mechanism 33A to enter the specimen measuring section 141, the reaction trays 36 are partly supported by the shutter plate 140, and when the vertical guide mechanism 33A is lowered to leave the reaction trays in the specimen measuring section 141, the shutter plate 140 supports the reaction trays 36, thus allowing them to remain in the specimen measuring section 141, which is completely blocked from the surrounding light. The structure of shutter mechanism 138 is described below in detail in item of "(2) Detection module having extension of walking beam mechanism as transfer means".

As shown in Fig. 22, the specimen measuring section 141 includes a dispensing nozzle drive assembly 142, which is designed to drive intermittently associated nozzles in unison with the dispensing of the first-, second-, third-, fourth-, fifth- and sixth-axis reagent injection units 20, 21, 22, 23, 24 and 25 in the specimen processing module 16. Also, the specimen measuring section 142 includes a luminescence measuring unit 143 equipped with a trigger reagent ejecting nozzle unit, which is a seventh axis reagent injection unit with a trigger reagent bottle.

In the specimen measuring section 141 each well of the reaction tray 36 is covered by an associated closure 144, and then the trigger reagent is injected into its second cavity 41, thereby causing the specimen to generate luminescence, the intensity of which is determined. The trigger reagent injection nozzle has a luminescence measuring means integrally connected thereto.

Also, it may be possible that prior to injection of the trigger reagent, the amount of surrounding light of each well is determined. Although not shown in the drawing, there are a first dark compartment for blocking the transmission of light to the trigger reagent bottle and a second dark compartment for blocking the transmission of light to the luminescence measuring means which may comprise a photomultiplier.

The luminescence measurement on each well 39 of the reaction trays 36 is effected synchronously with the dispensing in the specimen processing module 16. Specifically, the twenty wells 39 of the two reaction trays 36 arranged laterally in series are subjected to luminescence measurement during the 120 second-long pause of the step-by-step transfer of the reaction trays. It takes 5.5 seconds to finish the luminescence measurement for each well 39, and hence 110 seconds (5.5 seconds x 20 wells) to finish the luminescence measurement for all wells 39. Thus, within the remaining ten seconds the opening-and-closing control 137 opens the bottom opening 138 to permit the vertical drive mechanism 33 to lower the two reaction trays 36 down to transfer position. After the remaining ten seconds have passed, the reaction tray transfer means 146a, which moves synchronously with the walking beam mechanism 101 (65), transports these reaction trays forward to disposing position.

### (2) Detection module having extension of walking beam mechanism

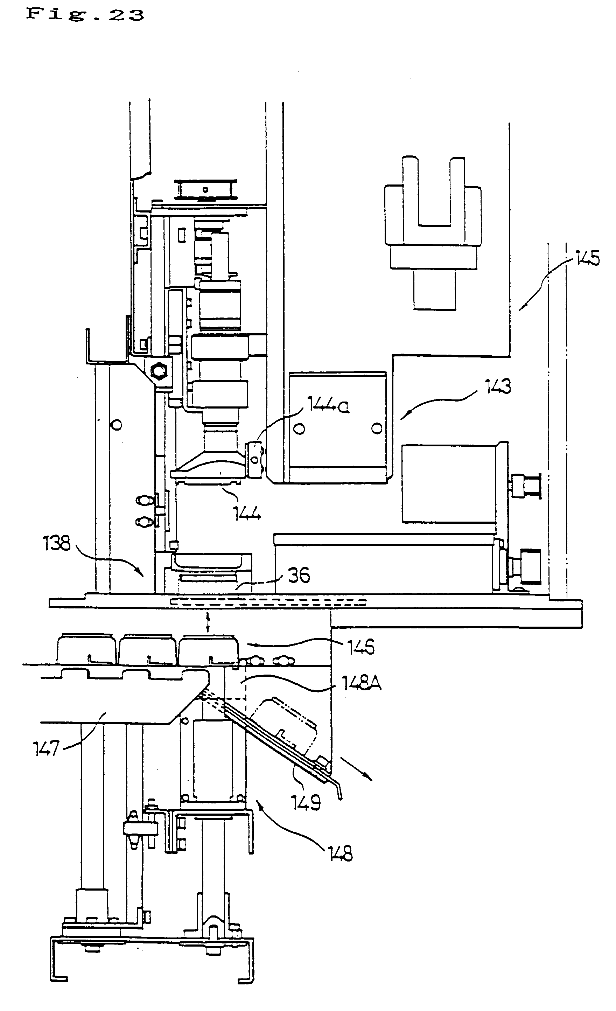

As shown in Fig. 23, a detection module 145 comprises a transfer section 146A for transporting reaction trays 36, a shutter 138 for providing a dark room and a specimen measuring section 143 for determining an intensity of chemiluminescence from the immunoreacted specimen. The specimen measuring section 143 is same in structure with the corresponding section in the preceding "(1) Detection module equipped with extra transfer means", and therefore, explanation thereof is omitted.

The transfer section 146A comprises a reaction tray transfer unit 147, a vertical drive section 148 and an incline board 149 for reaction trays to allow sliding down of the reaction trays.

The reaction tray transfer unit 147 is an extension from the walking beam mechanism 101 (65). Specifically, the walking beam mechanism 101 (65) is extended to an entrance of the specimen measuring section 143. During the pause of the step-by-step transfer of reaction trays by the walking beam mechanism 101 (65), the vertical guide-drive mechanism 148A of the vertical drive section 148 raises the reaction tray(s) 36. The rose reaction trays 36 shall be covered by a closure 144, permitting trigger injection nozzle(s) 144a to inject a trigger reagent into the reaction trays. After the chemiluminescence was measured, the reaction trays 36 are lowered by the vertical guide-drive mechanism 148A until they are put on the extension of the walking beam mechanism 101 (65), which has just resumed transportation. Accordingly, following reaction trays on the extension of the walking beam mechanism 101 (65) push those staying ahead in front of the incline board 149 for sliding and falling down in the disposing position. The closure 144 and the trigger reagent injection nozzle 144a are integrally connected to form a single unit.

The vertical guide-drive mechanism 148A of the vertical drive section 148 raises every two laterally arranged reaction trays 36 sequentially selected from those transported by reaction tray transfer unit 147 of the walking beam mechanism upto the inside of the specimen measuring section 143, and it lowers the two reaction trays simultaneously after measurement. The rising-and-lowering of reaction trays is effected synchronously with opening-and-closing of the shutter mechanism 138 of the specimen measuring section 143.

As briefly described in "(1) Detection module equipped with extra transfer means", the shutter mechanism 138 is designed to be responsive for allowing putting-in of reaction trays into the specimen measuring section 143 to provide a dark room.

The specimen measuring section 143 is equipped with thermo-control means (not shown) to keep the inside at a constant temperature, thereby permitting required measurement under same condition.

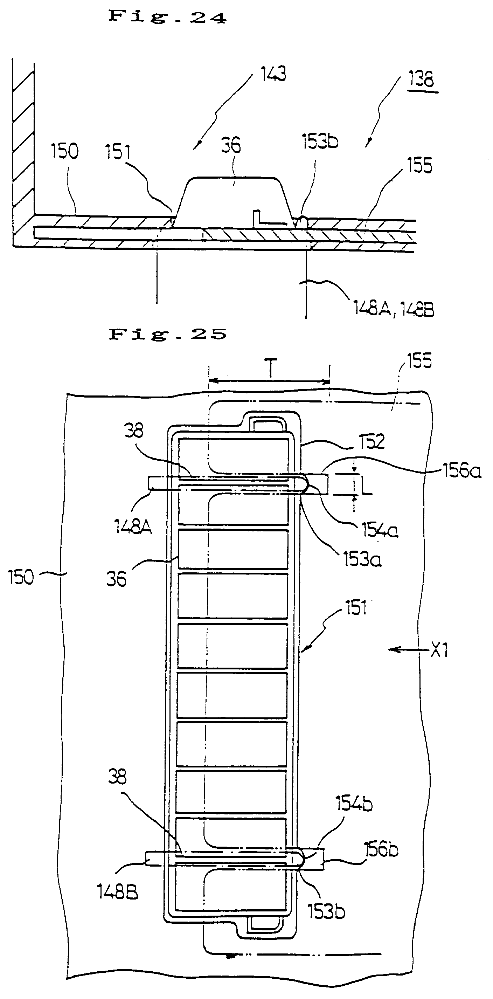

As seen from Figs. 24 and 25, the shutter mechanism 138 comprises an entrance opening 151 formed in a double-walled bottom plate 150 of the specimen measuring section 143 and a slidable closure 155 supported by the double-walled bottom plate 150 to block the surrounding light.

The entrance opening 151 are large enough to allow the reaction tray(s) 36 to pass therethrough (see opening 152), and has slots 154a and 154b to allow passing there through the projections 153a and 153b of the vertical guide-drive mechanism 148 (148A and 148B).

The closure 155 is made to slide and close the entrance opening 151 to block the invasion of surrounding light into the specimen measuring section 143, thus providing a dark room. The closure 155 is large enough to cover the entrance opening 151, and has two slots (L wide x T long) to allow passing of the vertical guide-drive mechanism (148A and 148B).

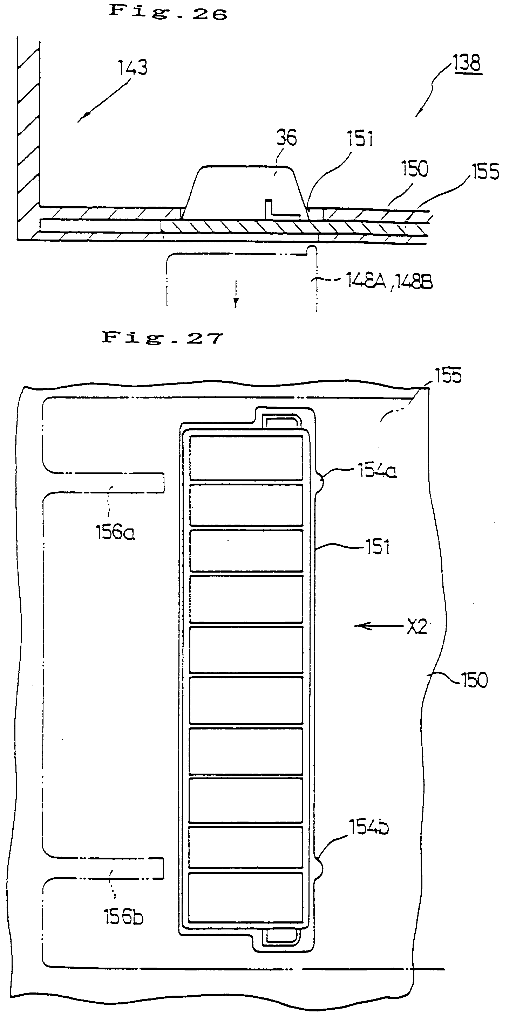

The operation of the shutter mechanism 138 shall be explained below:
① Referring to Figs. 24 and 25, the vertical guide-drive mechanism (148A and 148B) are fitted in the opposite slots 38 and 38 formed in the bottom of reaction tray 36 to raise the reaction tray until it passes through the entrance opening 151 to get in the specimen measuring section 143.
② The slidable closure 155 moves in closing direction as indicated by an arrow X1 in Fig. 25 to go beyond the longitudinal center line of the reaction tray 36, stopping there to support the reaction tray, not allowing it to incline or fall down.
③ Referring to Figs. 26 and 27, the vertical guide-drive mechanism (148A and 148B) descends, leaving the reaction tray 36 behind on the closure 155. Then, the closure 155 is allowed to move in the closing direction as indicated by an arrow X2 in Fig. 27, while supporting the reaction tray 36 until it completely closes the entrance opening to change the specimen measuring section 143 to a dark room.

Although the closure 155 slides on the bottom of the reaction tray 36, the reaction tray 36 is fitted in the entrance opening 151 to be retained in the rising position, causing no deviation from correct position in the specimen measuring section 143.

The dispensing of trigger reagent and determination of luminescent intensity in the dark room ares effected synchronously with the incubation effected in the specimen processing module 16.

As described in "(1) Detection module equipped with extra transfer means", required measurement is effected on the twenty wells 39 of the two reaction trays 36 laterally arranged in series for the 120 second-long pause of the step-by-step transfer of the reaction trays. It takes 5.5 seconds to finish the measurement on each well 39, and hence, 110 seconds (5.5 seconds x 20 wells) in total. For the remaining 10 second-long period the two reaction trays 36 are lowered, thereby allowing them to get out through the shutter mechanism 138 of the specimen measuring section 143, and they are put on transfer position. Thereafter, these reaction trays are transported by the extension of the walking beam mechanism 101 in the X-axis direction to the disposing position where they slide on the incline board 149 to fall down at its end.

Whether use is made of (1) a detection module equipped with an extra transfer means or (2) a detection module having an extension of the walking beam mechanism, selective reagent injections into specimen accommodating wells, washing of immunoreaction product in the wells, and measuring of chemiluminescence can be effected in the Y-axis direction during the pause of step-by-step transfer on the reaction trays in the X-axis direction, thereby performing required immunoassay of selected specimens relative to different immunoassay or examination items within same reaction period of time at an increased efficiency, Periods of time for the pausing of transportation of the reaction trays in the X-axis direction, for driving injection nozzles in the Y-axis direction (110 seconds) and for driving in the X-axis direction (10 seconds) at the final stage should be understood as examples, and such periods can be set arbitrarily.

### [10] Data Processing Module:

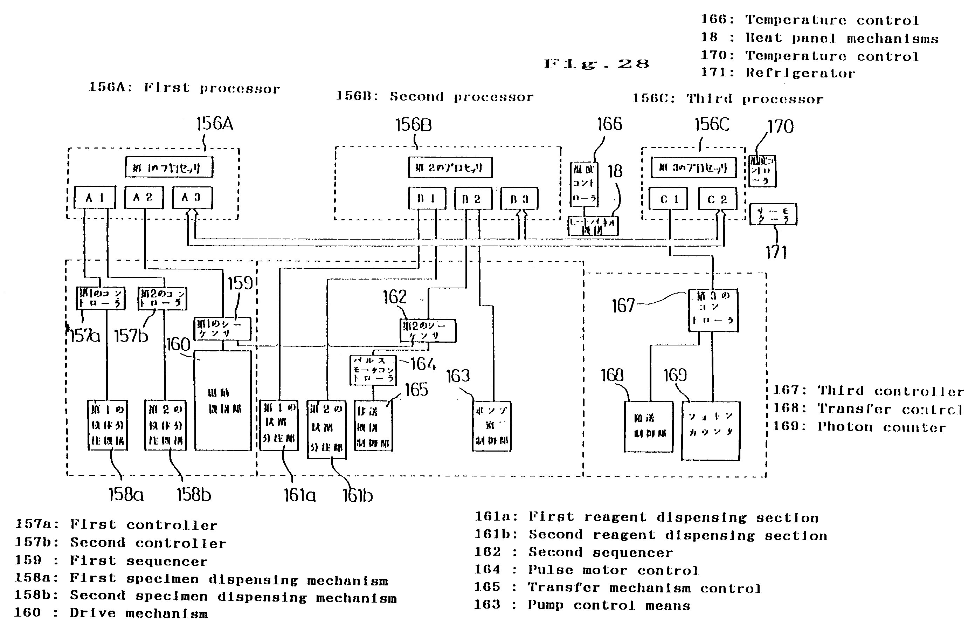

As shown in Fig. 28, an automated multi-item immunoassay system comprising a dispensing module, a specimen processing module and a detection module uses three processors (for instance, micro-computers) 156A, 156B and 156C connected to each other via a bus line, thereby transferring informations therebetween to permit injections of selected reagents into specimen-injected wells 39 of reaction trays 36 identified relative to exact transfer positions for each measurement or examination item of each of selected specimens, and check the reaction between the specimen and reagent for permitting exact control of required measurements.

The first processor 156A has three different control ports A1, A2 and A3 to control the dispensing module 2.

The first control port A1 is connected to a first controller 157a and a second controller 157b.

The first controller 157a comprises a first specimen dispensing mechanism 158a for controlling the injection nozzle sub-unit 14A of the dual nozzle unit 11 in the dispensing module 2 shown in Fig. 1. Specifically, the first specimen dispensing mechanism 158a controls the X-, Y- and Z-axis displacement of the injection nozzle sub-unit 14A to inject a selected specimen into all wells 39 of two reaction trays 36 which are laterally arranged in series and are put in the dispensing position, ahead of following reaction trays supplied by the tray supply section 2A, or inject a selected specimen into selected dilution tubes 64.

The second controller 157b comprises a second specimen dispensing mechanism 158b for controlling the injection nozzle sub-unit 14B of the dual nozzle unit 11 in the dispensing module 2. Specifically, the second specimen dispensing mechanism 158b controls the X-, Y- and Z-axis displacement of the injection nozzle sub-unit 14B to inject a selected specimen into all wells 39 of each of two reaction trays 36 which are laterally arranged in series and are put in the dispensing position, ahead of following reaction trays supplied by the tray supply section 2A, or inject a selected specimen into selected dilution tubes 64.

Thus, the first and second specimen dispensing mechanisms 158a and 158b control independent injection nozzle sub-units 14A and 14B for effecting required dispensing of selected specimens into reaction trays or dilution tubes 64.

The control port A2 is connected to a drive mechanism 160 through a first sequencer 159.

The first sequencer 159 controls the drive mechanism 160 based on informations from the first from the first processor 156A and a second sequencer 162 which is connected to the second processor 156B to be explained later.

The drive mechanism 160 controls the rising of reaction trays 36 by driving the tray supply section 2A and the stopping of reaction trays 36 at the specimen dispensing position 10 in the dispensing module 2 as well as the transferring of reaction trays 36 to the specimen processing module 16.

The drive control mechanism also controls the pre- and post-dilutions relative to each dilution tube 64 in the dilution tube rack 63 as described above in Chapter [5].

The third control port A3 of the first processor 156A is connected to the second processor 156B and third processor 156C via a bus line for transmitting informations therebetween.

The second processor 156B has control ports B1, B2 and B3 for controlling the specimen processing module 16 shown in Fig. 1.

The control port B1 is connected to a first reagent dispensing section 161a and a second reagent dispensing section 161b.

The first and second reagent dispensing sections 161a and 161b control the dispensing of reagents from the first-, second-, third-, fourth-, fifth- and sixth-axis reagent injection units 20, 21, 22, 23, 24 and 25 into the wells 39 of reaction trays 36. Detailed description was given above in Chapter [7] of "Dispensing of Reagent and Incubation"

The control port B2 is connected to the second sequencer 162 and a pump control means 163.

The second sequencer 162 is connected to a pulse motor control 164 connected to a transfer mechanism control 165.

The pulse motor control 164 is designed to control the transfer mechanism control 165. Specifically, the transfer mechanism control 165 controls the step-by-step transfer by the walking beam mechanism 101 (65) through exact control of an associated pulse motor in the specimen processing module 16, thereby permitting reaction trays 36 to stop at exact dispensing positions in the first-, second-, third-, fourth-, fifth- and sixth-axis reagent injection units 20, 21, 22, 23, 24 and 25 and in the heat panel mechanism 18.

The controlling of transfer mechanism control is performed on the basis of informations from the first sequencer 159 of the first processor 156A, i.e. informations on specimens given by the specimen dispensing module 2.

The pump control means 163 controls the pump groups associated with the first-, second-, third-, fourth-, fifth- and sixth-axis reagent injection units 20, 21, 22, 23, 24 and 25. Selected reagent or washing buffer is injected into reaction trays 36 identified in terms of their positions while the remaining amount of reagent is watched all the time. Detailed description was given in Chapter [7] "Dispensing of Portions of Reagent and Incubation".

The control port B3 is connected to the bus line to communicate with the first processor 156A and the third processor 156C.

The second processor 156B is equipped with a temperature control 166 separately from its control, which controls the heat panel mechanisms 18 to keep its tunnel type constant temperature baths at a given fixed temperature, thereby warming evenly all reaction trays 36 passing through the specimen processing module 16.

The third processor 156c has control ports C1 and C2.

The control port C1 is used to control a third controller 167 connected to a transfer control 168 and a photon counter 169.

The transfer control 168 functions to transfer reaction trays 36 into the measuring section in the detection module 32. Specifically, the transfer control 168 controls the vertical drive section 148 and the closure 140 relative to the shutter mechanism 138 of the measurement section to permit two reaction trays laterally arranged in series to get in and out of the measurement section simultaneously.

The photon counter 169 controls the measurement section 143 in the detection module 32. Specifically, the trigger reagent is injected into the second cavities 41 of the reaction trays 36 to determine the intensity of chemiluminescence.

The control port C2 is connected to the bus line to communicate with the first processor 156A and the second processor 156B for transmitting informations therebetween.

The third processor 156C is equipped with a temperature control 170 separately from its control, which controls a refrigerator 171 for keeping trigger reagent bottles (not shown in the detection module 32) at controlled temperature.

### Industrial Applicability

As explained hereinabove, the automated multi-item immunoassay system according to the present invention has such industrial applicability that;
(1) A specimen dispensing module with a single or plural nozzle units for dispensing specimens into reaction trays, a specimen processing module for incubation and a detection module for measuring an intensity of luminescence are arranged in neighboring manner to intermittently and slidingly transfer the reaction trays, so that exact and speedy dispensing of specimens and reagents as well as washing of a reaction product in wells of the reaction trays are possible to allow measurement of number of specimens.
(2) In the dispensing module, a dispensing means is provided, which can pour a selected specimen into all wells of reaction trays fed in succession from a tray supply section and stopped a predetermined position, so that a lot of reaction trays can be handled without leaving wells empty to allow measurement of number of specimens.
(3) A transfer means in the dispensing module has a first and second detection means which are provided on the upstream and downstream sides of the dispensing position, thereby permitting continuous and smooth transportation of the reaction trays.
(4) The twin specimen-injection nozzle sub-units are used in the dispensing module, each of which are separately transferred toward a selected well to simultaneously inject the specimen into the well, so that quick and accurate injections are permitted to allow handling of number of reaction trays in a relatively short period of time.
(5) Disposable injection tips have a diverging end somewhat larger in diameter than the nozzle end, so that the tip can be attached to the nozzle end simply by lowering the nozzle end and can be removed from the nozzle end simply by raising the nozzle end while holding the injection tip. In other words, the attaching and removing of disposable injection tips can be effected by single action.
(6) The dispensing module is equipped with dilution means, which permits automatic dilutions of selected specimens depending on its immunoassay or examination items to decrease required period of time therefor.
(7) The dilution means permits dilutions of a specimen before and after dispensing of the specimen. The pre- and post-dilutions cause effectively stirring, and therefore, no stirring or stirring means is required, and accordingly cost therefor can be saved without lowering measuring accuracy.
(8) Thanks to the walking beam mechanism permitting the step-by-step transfer of reaction trays in the specimen processing module, no deviation of reaction trays from correct positions is caused by thermal expansion due to a long-period incubation, thus assuring the exact reagent dispensing and washing of immunoreaction product due to incubation.
(9) The walking beam mechanism has parallel transferring beams which are designed to rise, go forward, descend and go backward to slidingly transfer the reaction trays, when the bars lie mainly in rising and forwarding stages. This mechanism is almost free of misalignment of reaction trays relative to exact positions in comparison with chain transfer means which may cause thermal expansion.
(10) The walking beam mechanism permits the simultaneous transfer of a plurality of reaction trays in the specimen processing module, thereby allowing the exact transportation of all reaction trays in same condition.
(11) The extension of the walking beam mechanism into the detection module area assures that reaction trays each accommodating immunoreaction product are transported to the detection module in unison with those travelling in the specimen processing module.
(12) The injections of reagents and the washing of immunoreaction product of the specimen and reagent are effected in the pause of the step-by-step transfer of reaction trays. These make possible accurate dispensing of the reagent and washing liquid.
(13) Measurement in the detection module is effected at same intervals as reagent dispensing in the specimen processing module, thus permitting required measurements under same time schedule.
(14) Integration of trigger reagent injection nozzles and means for measuring a luminescent signal with an intensity depending on an amount of substance to be measured and in the specimen permits space-reduction of the luminescence measuring unit, while still assuring the precision measurement.
(15) The luminescence measuring means in the detection module has a shutter plate or closure to close a reaction tray entrance opening while supporting reaction trays, thereby holding them in a dark room. This arrangement permits simplification of the structure of shutter mechanism and controlling of the same.
(16) The luminescence measuring means can move in the same direction as the trigger reagent dispensing nozzle unit, thereby permitting required measurement synchronously with the injection of the trigger reagent to assures measurements under same condition.
(17) The dark room is kept at a constant temperature, thereby reducing measurement errors caused by temperature change.
(18) The specimen processing module uses a plurality of reagent injection nozzles, which are movable freely across the longitudinal passage on which reaction trays travel. The dispensing of selected reagents are effected into wells identified in terms of their positions, and lateral lines of reaction trays are subjected to injections of reagents at regular time intervals to control incubation time. Thus, random accesses to selected wells are permitted in each lateral line.
(19) Reagent injection nozzles selected among a group of nozzles in each lateral line can perform random access to wells identified in terms of their positions with reference to which immunoassay or examination item of the specimen is selected. Injections of exact reagents into exact wells can be effected in each and every lateral well line of the reaction trays, within same period of time under exactly same condition.

## Claims

1. An automated multi-item immunoassay system comprising:
a dispensing module for subsequently supplying reaction trays with a plurality of wells and dispensing a specimen into the wells of reaction trays, based on informations predetermined for each of the selected specimens,
a specimen processing module for dispensing into selected wells a reagent responding to an examination item of the specimen, based on the predetermined informations, and transferring the reaction tray while keeping them at a constant temperature, and
a detection module for dispensing a trigger reagent into each well of every reaction tray, based on the predetermined informations, and measuring an intensity of luminescence, said modules being arranged side by side in series.

2. An automated multi-item immunoassay system according to claim 1, wherein said dispensing module is composed of a specimen dispensing means comprising a specimen injection nozzle unit; means for supplying the reaction trays; and means for transferring the reaction trays.

3. An automated multi-item immunoassay system according to claim 2, wherein said specimen injection nozzle unit comprises a plurality of sub-nozzle units.

4. An automated multi-item immunoassay system according to claim 2 or 3, wherein said specimen injection nozzle unit in the specimen dispensing means is of duplex nozzle type, comprising two sub-nozzle units capable of functioning independently, but one of them when shifted a distance corresponding to a selected number of wells to reach a selected well according to given informations on immunoassay items of a selected specimen, accompanying the other sub-nozzle unit, thus permitting said two sub-nozzle units to simultaneously start required dispensing into the selected well.

5. An automated multi-item immunoassay system according to claim 1 or 2, wherein said dispensing module further comprises dilution means.

6. An automated multi-item immunoassay system according to claim 5, wherein said dilution means is adapted to eject a dilution liquid before and after the dispensing of a selected specimen.

7. An automated multi-item immunoassay system according to claim 5 or 6, wherein said dilution means comprises a plurality of dilution sub-nozzle units to permit simultaneous ejection of dilution liquid.

8. An automated multi-item immunoassay system according to claim 5, 6 or 7, wherein said dilution means comprises means to permit said specimen injection nozzle unit to inject the diluted specimen into each of selected wells in the reaction tray.

9. An automated multi-item immunoassay system according to claim 2, wherein said reaction tray supplying means comprises a section for vertically supplying reaction trays, like an elevator; means for pushing and transferring reaction trays which are subsequently lifted-up; means for setting a dispensing position to stop the transferred reaction tray at that position; and means for dispensing the specimen to the reaction tray stopped at the position.

10. An automated multi-item immunoassay system according to claim 2 or 4, wherein said reaction tray transfer means in the dispensing module comprises, in the direction in which reaction trays are transported, a first detection means on the front or upstream side of the dispensing position and a second detection means on the rear or downstream side of the dispensing position, whereby reaction trays are allowed to advance one after another to the dispensing position when said first detection means detects a leading reaction tray and when no reaction tray remains in the dispensing position, and the reaction tray is allowed to leave the dispensing position when said second detection means detects no reaction tray ahead.

11. An automated multi-item immunoassay system according to claim 10, wherein said dispensing position setting means has a mechanism for elevator-like lifting the reaction tray stopped at the dispensing position, stopping the resection tray at a predetermined level to allow the dispensing of a selected specimen into the selected wells of the reaction tray, and descending the reaction tray accommodating the specimen in its every well on said reaction tray transfer means.

12. An automated multi-item immunoassay system according to claim 2, 3 or 4, wherein said dispensing module has a section for accommodating disposable injection tips to be attached each of nozzle end of the specimen dispensing nozzle unit, each of disposable tips having a tapering tip portion and a rear end with diameter larger than that of the nozzle end, so that the disposable tip is attached to the nozzle when the nozzle descends down, and being removed from the associated nozzle by being caught the rear end when the nozzle rises up.

13. An automated multi-item immunoassay system according to claim 1, wherein said specimen processing module comprises means for intermittently and slidingly transferring the reaction trays.

14. An automated multi-item immunoassay system according to claim 13, wherein said reaction tray transfer means is a walking beam mechanism in which parallel transfer beams are adapted to rise, move forward, descend and move backward, thereby intermittently and slidingly moving the reaction trays forward.

15. An automated multi-item immunoassay system according to claim 13 or 14, wherein said transfer means is adapted to move intermittently and slidingly a plurality of the reaction trays all together.

16. An automated multi-item immunoassay system according to claim 14, wherein said reaction tray transfer means is extended to the detection module.

17. An automated multi-item immunoassay system according to claim 1, wherein said reaction tray transfer means is adapted to move a plurality of series of reaction trays in parallel.

18. An automated multi-item immunoassay system according to claim 1 or 13, wherein said specimen processing module comprises a heating panel to keep the reaction trays at a predetermined temperature.

19. An automated multi-item immunoassay system according to claim 1 or 13, wherein said specimen processing module includes a group of reagent injection nozzles arranged in alignment with reaction tray transfer parallel lines, and being capable of moving across the reaction tray transfer lines.

20. An automated multi-item immunoassay system according to claim 19, wherein each reagent injection nozzle in each group is connected to an associated reagent bottle and pump via an elongated tube.

21. An automated multi-item immunoassay system according to claim 1 or 13, wherein said specimen processing module is adapted to effect the dispensing of a selected reagent into each of selected wells of a selected reaction tray, and the washing of immunoreaction product of the specimen and reagent in each well, when the reaction tray stops in the pause of the intermittent step-by-step transfer thereof.

22. An automated multi-item immunoassay system according to claim 1, wherein said detection module includes means for measuring the intensity of luminescence, which is made into an integral unit with a closure and a trigger reagent injection nozzle(s).

23. An automated multi-item immunoassay system according to claim 1 or 22, wherein said means for measuring the intensity of luminescence is adapted to move in the same direction as said trigger reagent injection nozzle(s).

24. An automated multi-item immunoassay system according to claim 1, 22 or 23, wherein said means for measuring the intensity of luminescence includes means to provide a dark room.

25. An automated multi-item immunoassay system according to claim 24, wherein said dark room is adapted to be kept at a constant temperature.

26. An automated multi-item immunoassay system according to claim 24 or 25, wherein said dark room has an opening to be closed by an associated shutter plate, said opening being large enough to allow entering of reaction tray(s) into the dark room.

27. An automated multi-item immunoassay system according to claim 1, 13, 17, 18, 19, 20, 21, 22 or 27, wherein the dispensing of a selected reagent in said specimen processing module is effected on selected wells of a selected reaction tray at regular time intervals and in the prescribed order, after movement of said group of reagent injection nozzles in the direction perpendicular to the direction in which reaction trays travel during the period of time when the reaction trays stop in the pause of the intermittent step-by-step transfer thereof, and the measurement in said detection module is effected on each well of the reaction tray in the prescribed order and at regular time intervals.

28. An automated multi-item immunoassay system according to claim 1, 13, 17, 18, 19, 20, 21, 22 or 27, wherein the dispensing of a selected reagent is effected on selected wells of the reaction tray in the prescribed order by the nozzle for said selected reagent, which nozzle is randomly selected from the group of reagent injection nozzles and according to a specified measurement or examination item to be effected on the well.
